# EUROPÄISCHE PATENTSCHRIFT

(11) **EP 0 685 110 B1**
(45) Veröffentlichungstag und Bekanntmachung des Hinweises auf die Patenterteilung: **17.06.1998**
(21) Anmeldenummer: 94906215.2
(22) Anmeldetag: 03.02.1994
(51) Int. Cl.: H01H 61/02, H01H 37/04, H01H 37/14

(54) **WIDERSTANDSEINHEIT, INSBESONDERE ÜBERWACHUNGSEINHEIT, FÜR EINEN LEISTUNGS-VERBRAUCHER**
RESISTOR UNIT, IN PARTICULAR MONITORING UNIT FOR A POWER CONSUMER
UNITE DE RESISTANCE, EN PARTICULIER UNITE DE SURVEILLANCE, POUR UN CONSOMMATEUR DE PUISSANCE

(30) Priorität: 13.02.1993 DE 4304436; 02.12.1993 DE 4341035; 02.12.1993 DE 4341036
(43) Veröffentlichungstag der Anmeldung: 06.12.1995
(73) Patentinhaber: E.G.O. Elektro-Gerätebau GmbH, 75038 Oberderdingen (DE)
(72) Erfinder: LORENZ, Josef, D-75015 Bretten/Neibsheim (DE); DE MARCO, Jürgen, D-75038 Oberderdingen (DE); KÖSSLER, Robert, / (DE)
(74) Vertreter: Patentanwälte Ruff, Beier, Schöndorf und Mütschele
(86) Internationale Anmeldenummer: EP9400313
(87) Internationale Veröffentlichungsnummer: WO9418689

(56) Entgegenhaltungen:
- DE-A- 1 673 529
- DE-A- 2 544 758
- DE-U- 7 622 749
- DE-U- 8 813 109
- DE-U- 8 908 841
- FR-A- 2 598 556
- FR-A- 2 634 587
- ELEKTRONIK, Bd.36, Nr.19, 18. September 1987, MUNCHEN DE Seiten 124 - 126 D. HOMBURG 'Schaltbeispiele mit thermischen Zeitrelais'
- IBM TECHNICAL DISCLOSURE BULLETIN, Bd.11, Nr.10, März 1969, NEW YORK US Seite 1319 V ANTONETTI 'Heater-thermoswitch protection'

## Beschreibung

Die Erfindung betrifft eine Einheit gemäß Oberbegriff von Patentanspruch 1 (siehe DE-U 8813109.2) die zur Überwachung bzw. Beeinflussung unterschiedlicher Funktionen, z.B. zum Steuern, Regeln oder dgl. von Betriebszuständen, und/oder zur Sicherung gegen Überbelastung geeignet sein kann. Solche vormontierten Einheiten können z.B. in einer Raumgröße von etwa 20 x 10 x 6 cm oder wesentlich weniger in Kraftfahrzeugen bzw. dazu verwendet werden, elektrische oder ähnliche Hilfsaggregate, wie Lüftungsgebläse, Scheibenwischer-Motoren oder dgl. zu steuern.

Zur Erfassung mindestens einer physikalischen Betriebsgröße weist die Überwachungseinheit vorteilhaft ein einziges oder eine Mehrzahl von Erfassungs- bzw. Schutzmitteln auf, wobei das jeweilige Schutzmittel zur Betätigung einer geeigneten Funktionseinheit vorgesehen sein kann, z.B. zur direkten mechanischen Betätigung eines elektrischen Unterbrechers bzw. Kontaktes aufgrund einer erfaßten Temperatur. Die Überwachungseinheit kann statt dessen oder zusätzlich eine oder mehrere Leistungsstufen, insbesondere des Verbrauchers, z.B. dadurch bestimmen, daß sie einen oder mehrere Vorwiderstände bildet, von denen einer oder mehrere wahlweise in Reihe mit dem Verbraucher zu schalten oder im Leitungsweg zu umgehen sind. Des weiteren kann die Überwachungseinheit vorteilhaft eine z.B. im wesentlichen synchron mit dem Verbraucher in und außer Betrieb zu nehmende Arbeitseinheit, wie eine Arbeitsbeheizung, aufweisen, deren physikalische Arbeitsgröße zweckmäßig diejenige ist, durch welche das jeweilige Schutzglied betätigt wird. Insbesondere, wenn der Verbraucher keine taktend zu steuernde Heizung oder dgl. aufweist, sondern im Einschaltzustand ununterbrochen mit Energie versorgt werden soll, wie z.B. im Falle eines elektromechanischen Energiewandlers, dient ein Schutzmittel bzw. Unterbrecher nur zur Sicherung gegen Überlastung. Hierbei wird die Überwachungseinheit, insbesondere das Schutzmittel, durch Rückkopplung von mindestens einem anderen Arbeitswert als einer manuellen Betätigung beeinflußt.

Weist die Überwachungseinheit ein Funktionsglied auf, das in einem vorgesehenen Betriebszustand eine Temperatur um 900°C bzw. mehr oder über 400°C haben kann, so besteht die Gefahr, daß Staub oder ähnliche Partikel, benachbarte weitere Bauteile oder dgl. entzündet werden und es zum Brand bzw. Schwelbrand oder Glühen kommt. Dies ist insbesondere dort der Fall, wo die Temperatur einer Steuerbeheizung teilweise oder im wesentlichen durch Infrarotstrahlung auf ein Schutzmittel übertragen wird.

Der Erfindung liegt die Aufgabe zugrunde, eine Überwachungseinheit zu schaffen, bei welcher Nachteile bekannter Ausbildungen bzw. der beschriebenen Art vermieden sind und die insbesondere bei kompakter bzw. einfacher Bauweise eine hohe Sicherheit bzw. vielseitige Einbaumöglichkeiten zuläßt.

Erfindungsgemäß ist das Schutzmittel wärmeleitend mit dem oder wenigstens einem der Widerstände thermisch gekoppelt derart, daß mindestens ein Leiter zur Wärmeleitung bis an die Schutzmittel reicht. Zweckmäßig werden bei einer solchen Überwachungseinheit in den Bereichen, in denen diese ungeschützt frei zugänglich ist, keine Anordnungen verwendet, von denen durch Glühen eine Entzündung ausgehen könnte, wobei diese Bereiche vorteilhaft in jedem vorkommenden Betriebszustand zwischen höchstens 800°C und weniger als 400°C etwa in 50°-Schritten jede Temperatur einnehmen können, je nachdem welche Anwendungserfordernisse gegeben sind. Unabhängig davon kann das jeweilige Schutzmittel zum überwiegenden Teil bzw. im wesentlichen ausschließlich durch Wärmeleitung mit mindestens einer Steuerbeheizung, einer Steuerkühlung oder dgl. gekoppelt sein.

Ein Wärmeleitglied für diese Kopplung kann über aneinander anschließende Teilabschnitte des Wärmeleitweges bzw. seines Querschnittes aus gleichen und/oder unterschiedlichen Werkstoffen, z.B. aus einem Substrat bzw. aus metallischen Werkstoffen, bestehen. Des weiteren kann das Wärmeleitglied entlang des Wärmeleitweges nebeneinanderliegende Teilwege aus solchen unterschiedlichen Werkstoffen bilden, wobei z.B. ein oder zwei Teilwege im wesentlichen durchgehend metallisch und ein Teilweg durch ein Substrat gebildet sind. Ist das Substrat ein keramischer Werkstoff, z.B. zu mindestens 85 bzw. 92 bis mindestens 96 % aus Al₂O₃, so kann es eine sehr geringe Dicke von weniger als 10 bzw. 7 bzw. 5 mm, nämlich etwa 1 bis 2 oder 1,5 mm bzw. vorzugsweise zwischen 1,27 und 6 mm aufweisen, wodurch seine thermische Speicherkapazität im Verhältnis zu seinen frei liegenden Oberflächen sehr niedrig gehalten werden kann. Dies führt zu einem sehr schnellen Ansprechen des Schutzgliedes bzw. dessen Temperatur auf Änderungen der an das Wärmeleitglied angrenzenden Umgebungstemperatur.

Anstatt ein von einem Schutzglied zu betätigendes Funktionsglied gesondert vom Wärmeleitglied vorzusehen und mit dem Schutzglied über ein mechanisches oder ähnliches Betätigungsglied zu kuppeln, ist dieses Funktionsglied zweckmäßig unmittelbar mit dem Wärmeleitglied verbunden. Dadurch kann das Funktionsglied, z.B. eine Schmelzsicherung in Form eines Löttropfens, eines zerstörungsfrei leicht auswechselbaren Sicherungsgliedes, eines aufgelöteten feinen Schmelzdrahtes oder dgl. bzw. in Form eines PTC-Widerstandes als Steuerbeheizung bzw. in Form eines Schalters, wie eines Schnappschalters oder dgl., unmittelbar am Wärmeleitglied angeordnet oder von diesem getragen sein. Ferner kann das Schutzglied eine vormontierte Baueinheit mit dem Funktionsglied bzw. der Funktionseinheit bilden, beispielsweise im Falle eines Temperaturschalters dadurch, daß ein Bimetall unmittelbar am Lenker eines bewegbaren Kontaktes angeordnet ist.

Das wärmeleitglied bildet vorteilhaft eine unter allen auftretenden Betriebsbedingungen formsteife Tragplatine, welche im wesentlichen ohne Zwischenglieder an einer Seite oder mehreren gesonderten Seiten die wesentlichen Funktionsglieder der Überwachungseinheit unmittelbar tragen kann. Dadurch kann eine geschlossene Baueinheit nach Art einer integrierten Schaltung gebildet werden, die mit einer eine gesonderte Baueinheit bildenden Anschlußeinheit so verbunden werden kann, daß im wesentlichen alle elektrischen Anschlüsse der Schaltungseinheit über die Anschlußeinheit an externe Leitungen anzuschließen sind. Dieser Anschlußkörper oder ein anderer Körper kann auch denjenigen Sockelkörper der Überwachungseinheit bilden, mit welcher diese an ihrem Verwendungsort so zu befestigen ist, daß die Schaltungseinheit berührungsfrei frei liegt bzw. als nur an einem Ende befestigter Kragarm frei ausragt.

Anstatt mindestens eine gesonderte Steuerbeheizung vorzusehen, kann die jeweilige Steuerbeheizung auch unmittelbar durch einen Vorwiderstand für einen oder mehrere Verbraucher gebildet sein, so daß auf eine gesonderte Steuerbeheizung vollständig verzichtet werden kann. Die jeweilige Steuerbeheizung ist zweckmäßig im wesentlichen symmetrisch zu einer Mittelebene eines Wärmeleitweges bzw. eines Wärmeleitgliedes vorgesehen. Sind mehrere, wahlweise ein- und ausschaltbare Steuerbeheizungen vorgesehen, so liegt jede zweckmäßig ebenfalls entsprechend symmetrisch zu dieser Mittelebene, so daß sich in jedem Betriebszustand eine gleich gute thermische Kopplung zum Schutzglied oder dgl. ergibt. Die Heizkreise bzw. Steuerwiderstände sind derart angeordnet, daß die Verlustwärme in den verschiedenen Leistungsstufen jeweils symmetrisch zur Längsmitte des Trägers freigesetzt wird.

Die Erstreckung der jeweiligen Steuerbeheizung entlang dieses Wärmeleitweges kann größer als quer dazu sein, z.B. wenn die Steuerbeheizung durch einen bandförmigen Strang gebildet ist. Die Steuerbeheizung kann annähernd bis an das Schutzglied bzw. die zugehörige Funktionseinheit reichen und/oder damit durchgehend wärmeleitend bzw. metallisch verbunden sein. Auch das Schutzglied bzw. die zugehörige Funktionseinheit liegt zweckmäßig etwa symmetrisch zur genannten Mittelebene, wobei seine größte Ausdehnung in Ansicht auf das Wärmeleitglied vorteilhaft näher zur genannten Mittelebene liegt.

Erstreckt sich die jeweilige Steuerbeheizung bzw. der jeweilige Vorwiderstand parallel zur genannten Mittelebene annähernd über die gesamte zugehörige Erstreckung des Wärmeleitgliedes, so können Anschlußpole für den jeweiligen Widerstand raumsparend im Bereich von dessen vom Schutzglied entfernten bzw. abgekehrten Endes vorgesehen sein, nämlich nahe benachbart zu bzw. annähernd anschließend an eine Außenkante des Wärmeleitgliedes. Alle genannten Funktionseinheiten können in Ansicht auf das Wärmeleitglied innerhalb von dessen Außenbegrenzungen vorgesehen sein.

Eine besonders vorteilhafte Ausbildung ergibt sich, wenn mindestens eine Funktionseinheit durch eine auf mindestens eine Seite des Wärmeleitgliedes aufgebrachte, thermisch und/oder elektrisch leitfähige Schicht gebildet ist. Z.B. können ein bis alle Widerstände, Anschlußpole, Befestigungsflächen oder dgl. nach Art von Dickschichtwiderständen auf das Wärmeleitglied aufgedruckt sein, das dann einerseits einen elektrischen Isolierkörper für diese Funktionseinheiten und andererseits einen thermischen Pufferspeicher, einen Wärmeverteiler bzw. einen Wärmeleiter zum Schutzglied, eine elektrische Anschlußleiste, eine Tragplatine für gesonderte Funktionseinheiten, einen Umgebungstemperatur-Fühler und/oder einen Kühlkörper für die Funktionseinheiten bildet. Der größere Flächenanteil mindestens einer Ober- bzw. Plattenfläche des Wärmeleitgliedes kann mit Funktionseinheiten besetzt sein, so daß nur ein kleinerer Teil oder höchstens etwa die Hälfte frei liegt, insbesondere auch im Anschluß an die Außenkanten des Wärmeleitgliedes.

Thermische und/oder elektrische Leiter bzw. Widerstände können als Silber-Palladium-Schichten ausgebildet sein, und durch Mischen von Leitpasten mit verschiedenem Palladiumbzw. Glasanteil kann der geforderte Widerstandswert eingestellt werden. Ferner können solche Leiter als Nickelschichten ausgebildet sein, die einen starken positiven Temperaturkoeffizienten (PTC) aufweisen. Wird ein PTC-Widerstand als Überlastungsschutz verwendet, so kann auf ein zusätzliches Regelelement vollständig verzichtet werden. Wegen der geringen Betriebstemperaturen kann auf Strahlungsabschirmungen für die Überwachungseinheit vollständig verzichtet werden, und es sind besondere Maßnahmen gegen Erhitzung des aus Kunststoff bestehenden Anschlußkörpers oder dgl. nicht erforderlich. Zweckmäßig ist die Justierung so vorgesehen, daß bei Funktionsstörungen des Verbrauchers bzw. eines von diesem betriebenen Systems die Stromzufuhr in spätestens 60 Sekunden unterbrochen wird.

In einer weiteren Überlastungsstufe, z.B. bei hohen Strömen bzw. hohen freigesetzten Leistungen, kann diese Abschaltzeit kürzer, nämlich unter 40 Sekunden verringert sein. Dieses günstige Verhalten ist in einfacher Weise durch die Anordnung der Heizleiter bzw. durch die Stromempfindlichkeit des thermischen Unterbrechers zu erreichen, der selbst unter den auftretenden Strömen als Heizung wirken kann.

Das Schutzmittel kann durch ein von dem Träger und dem oder den Widerständen gesondertes Teil gebildet sein. Es ist aber vorteilhaft auch möglich, den Träger und/oder die Widerstandsausbildung so vorzusehen, daß bei einer Übertemperatur der Stromfluß selbsttätig unterbrochen wird, indem der Widerstand sich selbst oder der Träger den Widerstand unterbricht. Das kann dadurch geschehen, daß ein aus Keramik oder einem Werkstoff mit ähnlichen Eigenschaften bestehender Träger aufgrund seiner generellen Material- oder Eigenspannungsverhältnisse durch besondere Ausbildung, wie Einkerbung, oder besondere, z.B. unsymmetrische Beheizungsverhältnisse so ausgebildet ist, daß der bei einer vorgegebenen Temperatur reißt und damit den Stromfluß durch den auf ihm z.B. als Dickschichtbahn vorgesehenen Widerstand oder die Zuleitung dazu unterbricht. Der Träger kann durch Wärmespannungen unter Zerstörung so platzen, daß der Heizwiderstand im Bereich der Risse zwischen den Träger-Bruchstücken ebenfalls reißt und so der Stromkreis bereits nach höchstens ein bis zwei oder drei bis vier Sekunden unterbrochen wird. Je nach den Leistungsverhältnissen kann für diese Unterbrechung jeder Widerstand oder nur ein Teil der Widerstände, insbesondere der jeweils leistungsstärkere Widerstand bzw. die leistungsstärksten Widerstände, vorgesehen sein.

Ausführungsbeispiele der Erfindung sind in den Zeichnungen dargestellt und werden im folgenden näher erläutert. In den Zeichnungen zeigen:
- Fig. 1: eine erfindungsgemäße Widerstands- bzw. Überwachungseinheit in Ansicht,
- Fig. 2: die Überwachungseinheit gemäß Fig. 1 in Seitenansicht,
- Fig. 3: einen Teil der Oberwachungseinheit gemäß Fig. 1 in Längsansicht und spiegelverkehrt,
- Fig. 4: einen Ausschnitt der Fig. 3 in vergrößerter Darstellung,
- Fig. 5: einen Ausschnitt einer weiteren überwachungseinheit in Ansicht,
- Fig. 6: die Überwachungseinheit gemäß Fig. 5 in Seitenansicht,
- Fig. 7: einen Ausschnitt der Fig. 6 in wesentlich vergrößerter Darstellung,
- Fig. 8 bis 15: weitere Ausführungsformen in Darstellungen entsprechend den Fig. 5 und 6 ,
- Fig. 16: ein weiteres Ausführungsbeispiel einer Basis in Ansicht,
- Fig. 17 und 18: eine weitere Ausführungsform entsprechend Fig. 1 oder 2, jedoch in Ausschnitten,
- Fig. 19: eine weitere Ausführungsform entsprechend Fig. 2 im Ausschnitt,
- Fig. 20 bis 23: zwei weitere Ausführungsbeispiele in Darstellungen entsprechend den Fig. 1 und 2,
- Fig. 24: ein Anschlußglied in Ansicht,
- Fig. 25: einen Ausschnitt der Fig. 24 in Ansicht von rechts und
- Fig. 26: einen Ausschnitt der Fig. 25 in Ansicht von rechts.

Die Einheit 1 weist eine in sich geschlossen vormontierbare und als solche zerstörungsfrei leicht auswechselbare Schaltungseinheit 2 mit einer durchgehend einteiligen Basis 3 auf, die auswechselbar und im wesentlichen freiliegend an einem Träger 4 annähernd spielfrei mit Vorspannung bzw. federnd und dadurch gedämpft sowie geräuscharm gelagert ist. Der Träger 4 weist in Längsrichtung aneinanderschließend einen im wesentlichen durch einen elektrischen Isolierkörper aus Kunststoff gebildeten sowie im Abstand von der Basis 3 berührungsfrei liegenden Anschlußkörper 5 und einen demgegenüber längeren Tragkörper 6 aus elektrisch leitfähigem Material, z.B. Blech, auf, welcher vom Anschlußkörper 5 über den größten Teil der Länge der Basis 3 so reicht, daß diese an dem vom Anschlußkörper 5 abgekehrten Ende über den Tragkörper 6 vorsteht.

Im Innern des gehäuseförmigen Anschlußkörpers 5 liegen in einer gemeinsamen, zur Basis 3 etwa parallelen Axialebene alle Anschlußglieder 7, die zum elektrischen Anschluß der Schaltungseinheit 2 erforderlich sind und parallel zueinander frei ausragen. Die Anschlußglieder 7 können durch Steckglieder mit zueinander bzw. zur genannten Längsrichtung etwa paralleler Steckrichtung gebildet und zur Kupplung mit einem eine entsprechende Anzahl von Gegengliedern aufweisenden Sammelstecker derart geeignet sein, daß zur Kupplung ausschließlich eine Steckbewegung und zur Entkupplung ausschließlich eine entgegengesetzte Abzugbewegung erforderlich ist.

Die Anschlußglieder ragen von der Schaltungseinheit 2 weg frei aus. Die Schaltungseinheit 2 bzw. deren Basis 3 und/oder eines bis alle ihre übrigen Bauelemente sowie ggf. auch die Anschlußglieder 7 sind im wesentlichen symmetrisch zu einer Mittelebene 8 ausgebildet bzw. angeordnet, die auch die Mittelebene des Trägers 4 bzw. der Körper 5, 6 bildet. Die Steuerungseinheit 1 dient in diesem Fall zur Befestigung an einer Mantel-Wandung 9 eines Strömungskanales 10, welcher zur Führung von Gebläseluft vorgesehen ist, z.B. um in einem Kraftfahrzeug-Fahrgast- und/oder Laderaum eine Be- oder Entlüftung durchzuführen. Der Strömungskanal kann aber auch nur von einem solchen Gebläse versorgt werden, das allein der Kühlung eines Motors dient und dessen Gebläserotor unmittelbar auf der Motorwelle bzw. innerhalb des Motorgehäuses angeordnet sein kann. In der Wandung 9 ist eine eng an die eckigen Außenumrisse des Anschlußkörpers 5 angepaßte öffnung 11 vorgesehen, durch welche die Überwachungseinheit 1 von außen in den Strömungskanal so weit eingesteckt werden kann, bis ein Umfangsbund des Anschlußkörpers 5 anschlägt. Die Öffnung 11 kann auch durch einen gesonderten, an der Innenund/oder Außenseite der Wandung 9 befestigten Halterungskörper begrenzt sein, so daß auch bei verhältnismäßig dünner Wandung 9 eine ausreichende Zentrierung und Verdrehsicherung der Einheit 1 um ihre Längsachse gewährleistet ist.

Im eingesteckten Zustand steht zumindest die Schaltungseinheit 2 im wesentlichen vollständig frei sowie berührungsfrei in den Strömungskanal 10 quer zur Strömungsrichtung vor, da ihr vom Anschlußkörper 5 entferntes Ende keine weitere Abstützung aufweist, wobei die ggf. elastische Wandung 9 rückfedernd gedämpfte Kippbewegungen der im wesentlichen spielfrei mit ihr verbundenen Einheit 1 zulassen kann.

Die Schaltungseinheit 2 weist als Basis 3 eine durchgehend einteilige, im wesentlichen rechteckig begrenzte Platte aus einem harten keramischen Substrat auf, die zwei voneinander abgekehrte und zueinander im wesentlichen parallele ebene Plattenflächen 12, 13 bildet. Die Längs- und Querkanten 14 bis 16 der Basis 3 können ununterbrochen durchgehend ebene Kantenflächen sein, die rechtwinklig aneinander anschließen, so daß eine sehr einfache Herstellung gewährleistet ist, nämlich die Basis 3 allein durch höchstens vier Schnitte aus einer größeren Platte herausgetrennt werden kann. Eine Querkante 16 liegt mit einem gegenüber der Plattenbreite kleineren Abstand benachbart zum Anschlußkörper 5, und die andere Querkante 15 steht um ein annähernd gleich großes Maß über das freie Ende des Trägers 4 bzw. Tragkörpers 6 vor.

Das Substrat bildet feinporige Oberflächen sowie einerseits einen elektrischen Isolierkörper und andererseits einen thermisch gut leitfähigen Körper. Ferner ist die Basis 3 zumindest in ihren vom Anschlußkörper 5 weiter entfernt liegenden Bereichen über thermisch allenfalls vernachlässigbar geringfügig leitende Zonen mit dem Tragkörper 6 verbunden, so daß ein Wärmeaustausch nur über Konvektion bzw. Fluidströmung möglich ist. Zu diesem Zweck steht die Basis 3 mit dem Tragkörper 6 nur über punkt- bzw. linienförmige Zonen, nämlich im Bereich der scharfwinkligen Kanten ihrer Längskantenflächen 14 mit dem Träger 4 in unmittelbarer Berührung.

Die feinporige Plattenfläche 12 bzw. 13 bildet einen sehr guten Haftgrund zur haftenden Befestigung von Funktionseinheiten 17 bis 20, für welche die Basis 3 gleichzeitig die einzige Tragplatine bildet, so daß diese Funktionseinheiten der Schaltungseinheit 2 mit der Basis 3 eine vorgefertigte integrierte Schaltung bilden können. Das Verhältnis von Länge zu Breite der Basis 3 kann dabei etwa in der Größenordnung von 10 zu 7 liegen und die Länge etwa 50 mm betragen.

Die Funktionseinheiten 17 bis 20 bilden Vorwiderstände, Heizwiderstände, Kühlkörper, Wärmeleitglieder und Fühlelemente eines Temperaturfühlers, während die Basis 3 nur zur Wärmeleitung, Kühlung und/oder Temperaturfühlung beiträgt. Die Funktionseinheiten 17 bis.19 bilden die Vor- und Steuerheiz-Widerstände. Diese sind als Leiterbahnen bzw. Dickschichtwiderstände haftend ausschließlich an der im wesentlichen vom Tragkörper 6 abgekehrten Plattenfläche 12 und nur, wenn aus Platzgründen erforderlich, ggf. auch auf der Plattenfläche 13 haftend aufgebracht. Z.B. können zwei Leiterbahnen an der Fläche 12 und eine an der Fläche 13 vorgesehen sein. Die metallischen Oberflächen der Widerstände 17 bis 19 liegen annähernd in der Ebene der Plattenfläche 12 bzw. stehen sie demgegenüber allenfalls um wenige 100stel Millimeter vor. Der Widerstand 17 mit dem geringsten Widerstandswert liegt mit annähernd konstanten Abständen beiderseits der Mittelebene 8 seitlich außerhalb der übrigen Widerstände 18, 19 so, daß der Widerstandswert des jeweiligen Widerstandes mit der Nähe zur Mittelebene 8 abgestuft zunimmt. Die jeweilige Leiterbahn kann auch durch einen nach Art eines Zementwiderstandes , ggf. vollständig verdeckt und ummantelt, eingebetteten bzw. einzementierten Draht oder dgl. gebildet sein.

Der Widerstand 17 ist im wesentlichen durch zwei mit geringem Abstand von und annähernd parallel zu den Längskanten 14 liegende Leiterbahnen gebildet, die mit geringem Abstand benachbart zur Querkantenfläche 15 über das zu dieser etwa parallel liegende bzw. zur Bildung einer U-Form quer zu ihnen liegende Funktionsglied 20, nämlich einen Unterbrecher bzw. Schalter miteinander leitend zu verbinden sind. Der nächst benachbarte Widerstand 18 ist annähernd U-förmig mit etwa parallel zu und mit Abstand von den Leiterbahnen des Widerstandes 17 liegenden Schenkeln ausgebildet, wobei ein Schenkel einteilig leitend in den benachbarten Schenkel des Widerstandes 19 übergeht, während der andere Leiterschenkel zu einem gesonderten Anschlußpol geführt ist.

Der von den Anschlußpolen entfernte Quersteg des Widerstandes 18 liegt höchstens um etwa seine Bahnbreite im Abstand von dem Unterbrecher 20, so daß er sehr nahe an diesen heranreicht. Der innerste Widerstand 19 ist in entsprechender weise mit Anschlußschenkeln ausgebildet, von denen einer einteilig leitend in den mit einem gesonderten Anschlußpol versehenen Schenkel des Widerstandes 18 übergeht, während der andere einen nur ihm zugeordneten Anschlußpol aufweist. Dieser Widerstand 19 bildet drei parallele Schleifen bzw. vier über Umlenkungen aneinanderschließende und zueinander parallele Leiterbahnenschenkel, deren etwa ihrer Bahnbreite entsprechende Zwischenabstände kleiner sind als die Zwischenabstände zu bzw. zwischen seitlich nach außen anschließenden Leiterbahnenschenkeln der weiteren Widerstände 18, 17.

Auch die näher benachbart zum Unterbrecher 20 liegenden Querstege des Widerstandes 19 haben nur den genannten geringen Abstand von dem Quersteg des nach außen benachbarten Widerstandes 18. Jeder Widerstand 17, 18, 19 für sich liegt somit im wesentlichen symmetrisch beiderseits der zu den Längskanten 14 parallelen und zur Plattenebene der Basis 3 rechtwinkligen Mittelebene 8 und erstreckt sich von den zugehörigen Anschlußpolen über den größten Teil der Restlänge der Basis 3, wobei diese Länge mit zunehmendem Widerstandswert abgestuft geringer wird, so daß der Widerstand 17 die größte Länge hat, nämlich seine beiden Streifenbahnen, bis in die Endbereiche des Unterbrechers 20 reichen, mit welchem sie wärme- und elektrisch leitend so verbunden sind, daß der Unterbrecher 20 in Reihe zwischen die beiden Leiterbahnen des Widerstandes 17 geschaltet ist.

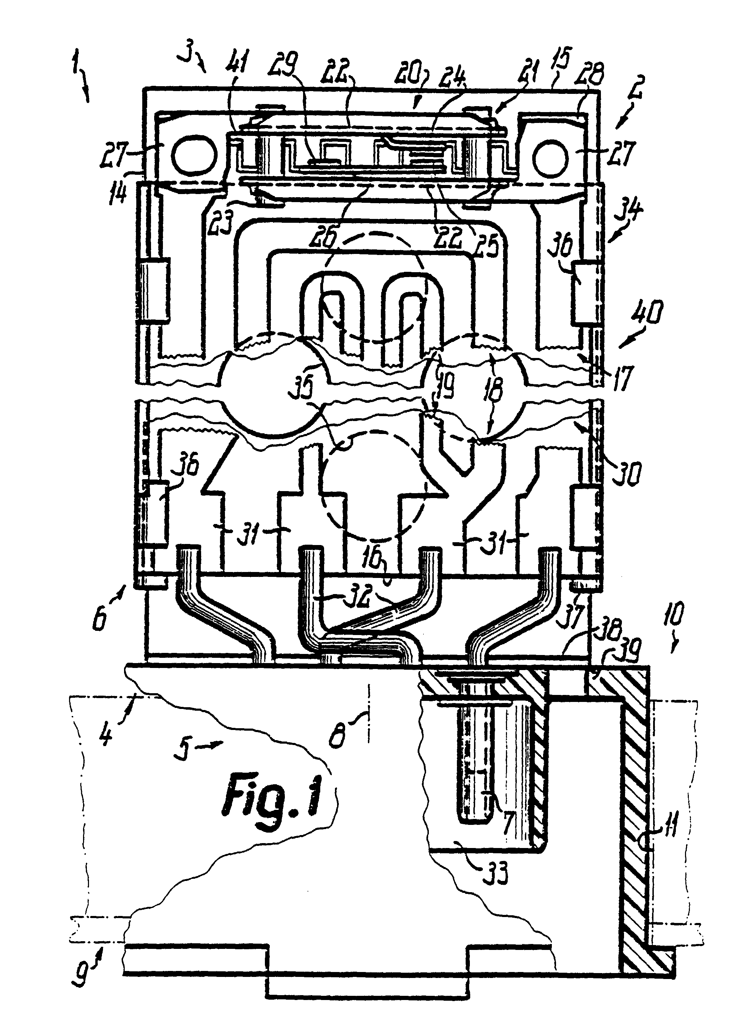

Der in Ansicht gemäß Fig. 1 längliche und quer zur Mittelebene 8 liegende Unterbrecher 20 weist einen entsprechend geformten Sockel 21 auf, der durch zwei einander im Abstand berührungsfrei gegenüberstehende sowie gegeneinander elektrisch isolierte metallische Sockelwangen 22 aus Blech oder dgl. sowie diese verbindende Isolierkörper, nämlich Bolzen 23, gebildet ist. Die zur Plattenfläche 12 etwa parallelen Bolzen 23 bestehen zweckmäßig aus einem keramischen Substrat der beschriebenen Art und sind in aus den Sockelwangen 22 herausgeformte Buchsen derart eingepreßt, daß sie die beiden Sockelwangen 22 nach Art elektrischer Wärmeleitglieder thermisch leitend verbinden sowie spielfrei starr gegeneinander festlegen.

Die Sockelwangen 22 sind im Querschnitt U-förmig, und aus dem Quersteg der von den Widerständen 18, 19 weiter entfernt liegenden Sockelwange 22 ist eine Lasche zur anderen Sockelwange 22 hin herausgeformte, welche einen feststehenden Kontakt 24 trägt. Dieser liegt ein etwa parallel zur Plattenfläche 12 bewegbarer Kontakt 25 gegenüber, der am freien Ende eines federnd auslenkbaren Schaltarmes 26 vorgesehen ist. Das andere Ende dieses Schaltarmes ist mit Abstand vom Kontakt 25 nur auf einem Teil seiner Breite an einer nockenförmigen Erhebung befestigt, die aus dem Quersteg der anderen Sockelwange 22 herausgeformt ist. Die Kontakte 24, 25 und der Schaltarm 26 liegen zwischen den Sockelwangen 22 bzw. zwischen den zur Mittelebene 8 etwa parallelen Bolzen 23.

Im Anschluß an die Aufnahme für das jeweilige Querverbindungsglied 23 geht jeweils das Ende einer der beiden Sockelwangen 22 einteilig in ein plattenförmiges Verbindungsglied 27 über, das etwa parallel zur Plattenfläche 12 liegt und von der zugehörigen Längskante 14 etwa den gleichen Abstand wie die zugehörige Leiterbahn des Widerstandes 17 hat. An jedem Ende des Sockels 21 ist das Verbindungsglied 27 durch eine andere der beiden Sockelwangen 22 gebildet, wobei die Verbindungsglieder 27, in Längsrichtung des Sockels 21 gesehen, seitlich nicht oder nur unwesentlich über die voneinander abgekehrten Außenseiten des übrigen Sockels 21 bzw. der Sockelwangen 22 vorstehen. Die Verbindungsglieder 27 liegen etwa in der Ebene der zur Plattenfläche 12 näheren U-Schenkel der Sockelwangen 22, so daß sie nach Auflegen des Unterbrechers 20 auf die Plattenfläche 12 in der Breite vergrößerte, ebene Anschlußpole 28 annähernd vollflächig überdecken, die durch die zugehörigen Enden der Leiterbahnen des Widerstandes 17 gebildet sind.

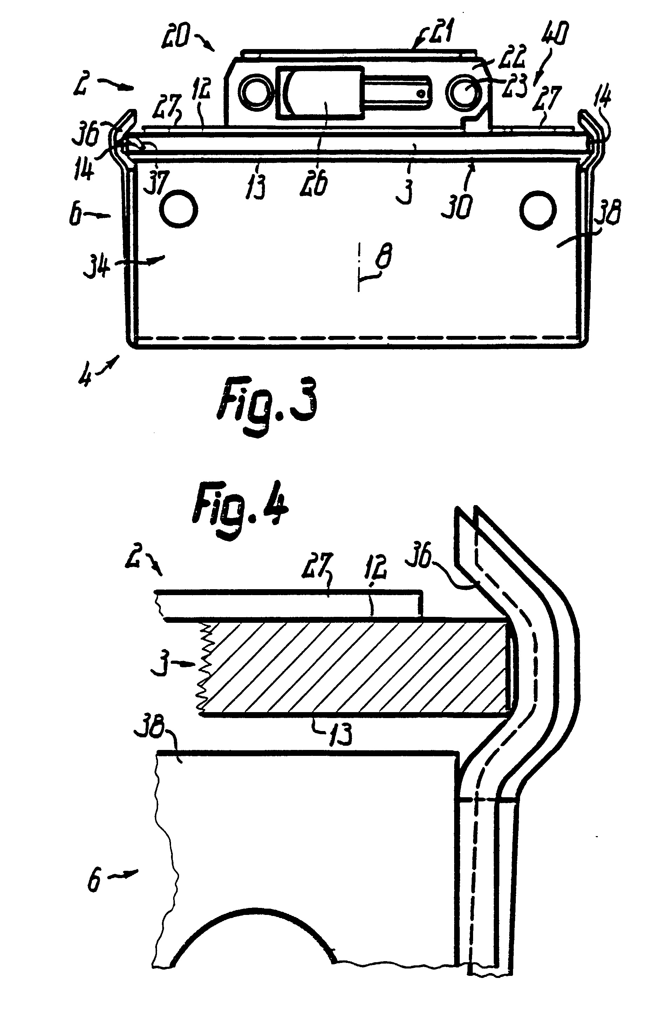

Mit diesen Anschlußpolen 28 sind die beiden Verbindungsglieder 27 durch Lötung oder dgl. gut leitend verbunden, wodurch alleine der Unterbrecher 20 auch lagegesichert mechanisch an der Basis 3 befestigt ist. Die Anschlußpole 28 können unmittelbar durch die genannte Schicht des Widerstandes 17 gebildet sein, so daß die entsprechenden Querstege der Sockelwangen 22 annähernd in wärmeleitender Verbindung mit der Plattenfläche 12 stehen oder von dieser allenfalls wenige 100stel Millimeter Abstand haben. Das in Fig. 1 links und in Fig. 3 rechts erkennbare Verbindungsglied 27 bildet gemeinsam mit der zugehörigen Sockelwange 22 die elektrische Leitungsverbindung zum Kontakt 24, während das andere Verbindungsglied 27 über die andere Sockelwange 22 und den Schaltarm 26 die elektrische Zuleitung zum Kontakt 25 bildet.

Gleichzeitig bilden diese Leitungswege auch Wärmeleitwege für ein als Temperaturfühler arbeitendes Schutzglied 29, das nach Art eines Bimetalles den in sich federnden Schaltarm 26 betätigt und dadurch den Kontakt 25 öffnet oder schließt. Der Schaltarm 26 ist als Schnappfeder ausgebildet, so daß der Kontakt 25 schnappend geöffnet bzw. geschlossen wird. Das Schutzglied 29 ist an der von der zugehörigen Sockelwange 22 bzw. der nockenförmigen Erhebung abgekehrten Seite des zugehörigen Endes des Schaltarmes 26 z.B. dadurch befestigt, daß alle drei genannten Bauteile über eine einzige Punktschweißung durchgehend miteinander verbunden sind. Das Schutzglied 29 liegt dadurch zwischen den Sockelwangen 22 bzw. deren Querverbindungen 23 und näher zu der von den Kontakten 24, 25 weiter entfernten Querverbindung, so daß die Kontakte 24, 25 einerseits und das Schutzglied 29 andererseits beiderseits im Abstand von der Mittelebene 8 vorgesehen sind.

Das Schutzglied 29 ist über den Sockel 21 gut wärmeleitend mit der Basis 3 und allen Leiterbahnen verbunden. Gleichzeitig liegt es in einem seitlich durch die Sockelwangen 22 und an einer weiteren Seite durch die Basis 3 begrenzten, zur Mittelebene 8 etwa rechtwinkligen sowie an beiden Enden offenen Strömungskanal, der etwa parallel zur Strömung im Strömungskanal 10 ausgerichtet ist. Somit bilden die Basis 3, die Widerstände 17 bis 19 und der Sockel 21 sowie der Schaltarm 26 ein Wärmeleitglied 30, über welches die von dem jeweiligen Widerstand im Betrieb entwickelte Wärme dem Schutzglied 29 mit nur geringem Wärmeverlust zugeführt werden kann, sofern nicht wenigstens Teile des Wärmeleitgliedes 30 im Strömungskanal 10 von Kühlluft umspült werden.

Im Anschluß an oder mit geringem Abstand von der Querkante 16 bildet die Leiterbahn des jeweiligen Widerstandes 17 bis 19 einen Anschlußpol 31, so daß hier für drei zu zweit oder zu dritt in Serie zu schaltende Widerstände 17 bis 19 vier im wesentlichen gleiche Anschlußpole 31 gleichmäßig entlang der Querkante 16 auf der Plattenfläche 12 verteilt sind. Jeder Anschlußpol 31 ist wie die Anschlußpole 28 durch ein annähernd rechteckiges Dickschichtfeld gebildet, und die beiden seitlich äußersten Anschlußpole 31 des Widerstandes 17 haben etwa gleich großen Abstand von der benachbarten Längskante 14 wie die zugehörige Leiterbahn, so daß auch die Anschlußpole 31 etwa spiegelsymmetrisch beiderseits der Mittelebene 8 liegen.

Jeder Anschlußpol 31 ist durch eine leitende Zwischenverbindung 32 mit einem der Anschlußglieder 7 verbunden, nämlich durch ein eigensteifes, mindestens ein- bzw. zweifach stumpf- und/oder rechtwinklig abgewinkeltes Drahtstück oder dgl., dessen eines Ende auf dem zugehörigen Anschlußpol 31 angelegt und durch Schweißen mit Ultraschall oder dgl., Löten, Klammern oder dgl. im wesentlichen lagestarr befestigt ist. Das andere, dazu parallele Ende des Verbindungsstückes 32 ist als Rundstecker in das zugehörige hülsen- bzw. rohrförmige Anschlußglied 7 eingesteckt, das nach Art eines Hohlnietes lagestarr am Anschlußkörper 5 befestigt ist. Durch eine der genannten Befestigungsarten bzw. durch Einlöten, Verpressen und/oder Quetschen ist dieses Ende gegenüber dem Anschlußglied 7 und damit gegenüber dem Anschlußkörper 5 spielfrei lagegesichert. Eine entsprechende Hülsensteckerverbindung oder dgl. ist auch am Anschlußpol möglich. Die vier gleichmäßig verteilten Zwischenverbindungen 32, von denen die mittleren einander gemäß Fig. 1 kreuzen, tragen zur lagesteifen Verbindung der Basis 3 bzw. des Tragkörpers 6 mit dem Anschlußkörper 5 bei.

Da alle Zwischenverbindungen 32 gegenüber den Anschlußgliedern 7 parallele Steckrichtungen haben, können sie entweder zuerst an der die Basis 3 einschließenden Baueinheit befestigt und dann durch einen Steckvorgang mit dem Anschlußkörper 5 verbunden werden oder sie können zuerst mit der diesen Anschlußkörper 5 und ggf. den Tragkörper 6 einschließenden Baueinheit 4 verbunden werden, in welche dann die Schaltungseinheit 2 etwa parallel zu der genannten Steckrichtung so eingesetzt werden kann, daß die zugehörigen Enden der Zwischenverbindungen 32 an den Anschlußpolen 31 anliegen.

Der napf förmige und an der von der Schaltungseinheit 2 abgekehrten Seite offene Anschlußkörper 5 bildet im Abstand innerhalb seines äußersten Napfmantels eine ebenfalls napfförmige Steckeraufnahme 33 dadurch, daß von seiner Bodenwand ein alle Anschlußglieder 7 umgebender Mantel einteilig in den Napfraum vorsteht. Das freie Ende der Steckeraufnahme 33 steht über die Anschlußglieder 7 vor und gegenüber der Napföffnung des Anschlußkörpers 5 zurück. Zur Verbindung mit dem dadurch gebildeten Anschlußstecker 5 ist ein Sammelstecker geeignet, der an einem Isolierkörper Gegenglieder zur leichten Verbindung mit den Anschlußgliedern 7 so aufweist, daß im zusammengesteckten Zustand wenigstens eine der Napföffnungen nach außen im wesentlichen lückenlos geschlossen ist und sich eine völlig abgeschirmte Anordnung der Anschlußglieder 7 und Gegenglieder ergibt.

Der Tragkörper 6 bildet mit der Basis 3 ein im Querschnitt flach rechteckiges Gehäuse 34, dessen größere Querschnittserstreckung quer zur Mittelebene 8 liegt. Zu diesem Zweck ist der aus Blech bzw. Stahl, Aluminium oder dgl. bestehende Tragkörper 6 im Querschnitt U-förmig ausgebildet, und die Basis 3 ist an den Enden der Schenkel des Tragkörpers 6 so befestigt, daß zwischen beiden Bauteilen Lüftungs- bzw. Strömungsschlitze gebildet sind. Dazu bildet jeder Schenkel einteilig zwei im Abstand zueinander und verhältnismäßig nahe zu jeweils einem zugehörigen Ende des Tragkörpers 6 liegende Klammern 36, welche an der zugehörigen Längskantenfläche 14 so anliegen, daß sie im wesentlichen nur deren Kanten linienförmig mit Vorspannung berühren. Dadurch kann ein nennenswerter Wärmeübergang von der Basis 3 auf den Tragkörper 6 vermieden werden.

Die Klammern 36 können durch Enden von Federarmen gebildet sein, durch die Wärmedehnungen spielfrei ausgeglichen werden. Über das freie Ende des Tragkörpers 6 steht die Basis 3 etwa um dasjenige Maß vor, das der Unterbrecher 20 in dieser Richtung einnimmt, so daß der Unterbrecher 20 außerhalb dieses Endes freiliegt. Die Basis 3 kann wahlweise quer zu ihrer Ebene oder in der genannten Steckrichtung derart in die Klammern 36 eingesetzt werden, daß sie quer zu ihrer Ebene im wesentlichen formschlüssig gehalten ist. Gegen Bewegungen zum Anschlußkörper 5 ist die Basis 3 durch Anschläge 37 gesichert, die benachbart zu den zugehörigen Klammern 36 aus dem Tragkörper 6 nach innen vorstehend herausgebogen sind und an denen die Querkante 16 anschlagen kann. Gegen Bewegungen in der entgegengesetzten Richtung ist die Basis 3 durch die Zwischenverbindungen 32 gesichert.

Im Schenkel und/oder im Quersteg weist der rostartig perforierte Tragkörper 6 im wesentlichen gleichmäßig verteilte großflächige Öffnungen 35 auf, durch welche die Luft ebenso wie durch die genannten Lüftungsschlitze so strömen kann, daß die Plattenseite 13 umspült wird. Die beiden Enden des Gehäuses 34 sind ebenfalls auf voller Gehäuseweite offen. Der zur Basis 3 etwa parallele Quersteg des Tragkörpers 6 ist gegenüber den U-Schenkeln zum Anschlußkörper 5 hin verlängert und zur Ebene der Basis 3 so abgewinkelt, daß ein Verbindungsschenkel 38 gebildet ist. Dieser im Längsabstand von der benachbarten Gehäuseöffnung und von der Querkante 16 liegende Schenkel 38 liegt an der Außenseite des Napfbodens 39 des Anschlußkörpers 5 an und ist an diesem mit zwei Hohlnieten oder ähnlichen Verbindungsgliedern lagestarr befestigt. In Längsansicht liegen alle außerhalb des Anschlußkörpers 5 bzw. des Napfbodens 39 vorgesehenen Bauteile innerhalb der Außenumrisse des äußeren Napfmantels des Anschlußkörpers 5, so daß sie beim Einschieben in die Öffnung 11 nicht stören.

Die Überwachungseinheit 1 arbeitet nach folgendem Verfahren:

Nach dem Einstecken der Überwachungseinheit in die Öffnung 11 liegt die Schaltungseinheit 2 mit dem Tragkörper 6 frei umströmt in dem Strömungskanal 10, wobei das Gehäuse 34 insofern einen Kühler bildet, als es die Luft der Basis 3 zuführt. Je nachdem, ob der Verbraucher nur über den Widerstand 17, über die Widerstände 17, 18 oder über die Widerstände 17 bis 19 betrieben wird, läuft er in einer höheren, einer niedrigeren oder seiner niedrigsten Leistungsstufe, und zwar über den thermisch beeinflußten Unterbrecher 20 gegen Überlastung gesichert. Wird der Verbraucher unter Umgehung aller Widerstände mit Strom versorgt, so läuft er in seiner höchsten Leistungsstufe, dann aber nicht durch den Unterbrecher 20, sondern durch eine in dieser zugehörigen Zuleitung bzw. im Verbraucher vorgesehene Sicherung, gesichert.

Der Verbraucher erzeugt einen Luftstrom, der im Strömungskanal 10 fließt und die Basis 3 bzw. den das Wärmeleitglied 30 bildenden Verbund umspült. Bei Leistungsdurchgang wirkt der jeweils in Betrieb stehende Widerstand 17 bis 19 gleichzeitig als Heizwiderstand, der außer den Leiterbahnen auch die Basis 3 im wesentlichen über ihre gesamte Flächenerstreckung gleichmäßig erwärmt. Bei strömender Luft liegt dabei die Betriebstemperatur der Basis 3 weit unter 400 °C aufgrund der Luftkühlung. Der Unterbrecher 20 ist so justiert, daß er bei dieser Betriebstemperatur geschlossen ist. Aufgrund der Erfassung der Luftströmung durch Temperaturänderungen wirkt das Wärmeleitglied 30 auch als Strömungsfühler 40, der die Menge der je Zeiteinheit durchfließenden Luft sowie deren Temperatur im wesentlichen stufenlos erfassen kann. Sinkt der Luftdurchsatz unter einen bestimmten Wert und/oder steigt die Lufttemperatur über einen vorbestimmten Wert, so steigt die Temperatur des Strömungsfühlers 40 auf einen immer noch unterhalb 400 °C liegenden Reaktionswert an, bei welchem das Schutzglied 29 den Kontakt 25 öffnet. Das Schutzglied 29 ist nämlich ständig wärmeleitend mit dem Strömungsfühler 40 verbunden und hat daher etwa dessen Temperatur, so daß es bei einem Temperaturanstieg im Bereich der Widerstände 17 bis 19 sehr schnell reagiert, zumal die Widerstände 17 bis 19 in allen Betriebszuständen bzw. Leistungsstufen eine symmetrische Wärmeentwicklung im Wärmeleitglied 30 bewirken. Wird ein Motor des Verbrauchers blockiert, so steigt die Leistungsbelastung des jeweils in Betrieb stehenden Widerstandes ebenfalls sofort an, wodurch selbst dann die Reaktionstemperatur erreicht wird, wenn der Strömungsfühler 40 noch umströmt wird.

Da nach dem Öffnen des Kontaktes 25 die Beheizung des Wärmeleitgliedes 30 abgeschaltet ist, könnte das Schutzglied 29 den Kontakt 25 sehr schnell wieder schließen. Um dies zu vermeiden, ist eine Selbsthaltung 41 vorgesehen, durch welche der Kontakt 25 in diesem Fall geöffnet bleibt. Dies erfolgt durch eine gesonderte Beheizung, die zweckmäßig ebenfalls über das Wärmeleitglied 30, jedoch auf kürzerem Leitungsweg als die Widerstände 17 bis 19, auf das Schutzglied 29 wirkt. Zu diesem Zweck sind die beiden Anschlußpole 28 über einen als Dickschichtwiderstand ausgebildeten Heizwiderstand miteinander verbunden, der mäanderförmig so unter dem Unterbrecher 20 bzw. zwischen den Sockelwangen 22 liegt, daß er den Sockel 21 nicht berühren kann.

Dieser Selbsthalte-Widerstand 41 hat einen wesentlich höheren Widerstandswert als der Unterbrecher 20, so daß er bei geschlossenem Kontakt 25 im wesentlichen stromlos ist. Nach Öffnen des Kontaktes 25 bzw. erst bei Erreichen eines kritischen Stromwertes jedoch wird der Widerstand 41 mit der Leistung beaufschlagt, und durch die von ihm ausgehende Wärmeentwicklung bzw. durch sein Ansprechen wird der Kontakt 25 über das Schutzglied 29 geöffnet gehalten. Erst dann, wenn die Leistungszufuhr zur überwachungseinheit 1 , z.B. über einen Zündschloß-Schalter des Kraftfahrzeuges, unterbrochen ist, wird auch der Widerstand 41 stromlos, und der Unterbrecher 20 schließt wieder selbsttätig, so daß danach durch erneutes Einschalten der Leistungszufuhr der normale Betrieb wieder aufgenommen werden kann, sofern die Störung beseitigt ist.

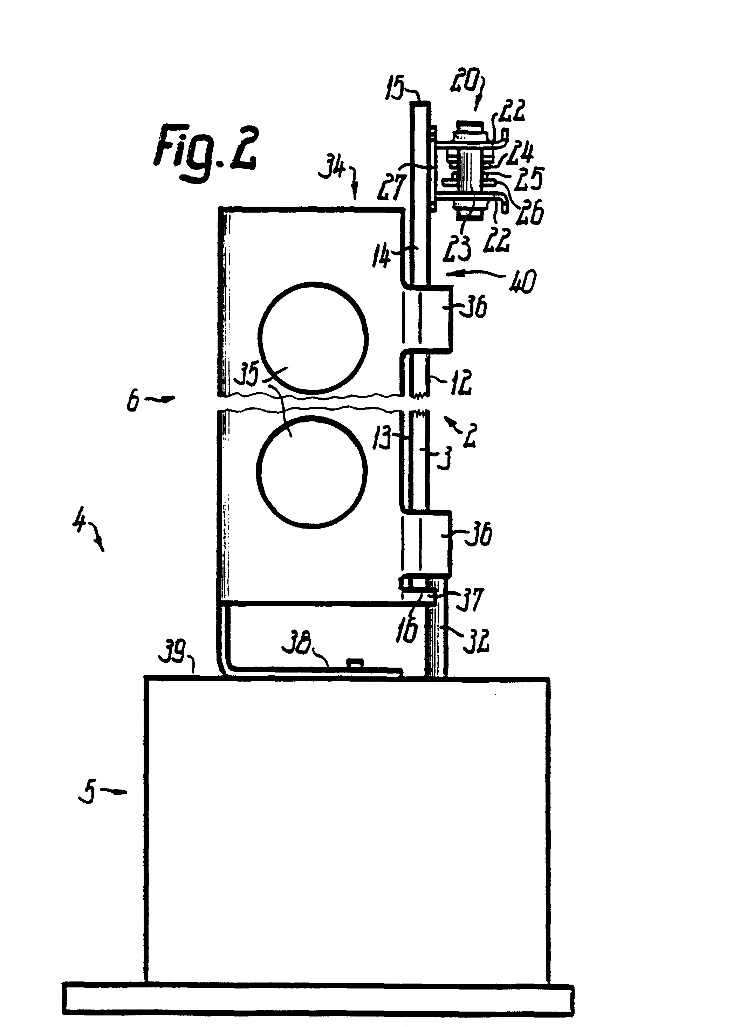

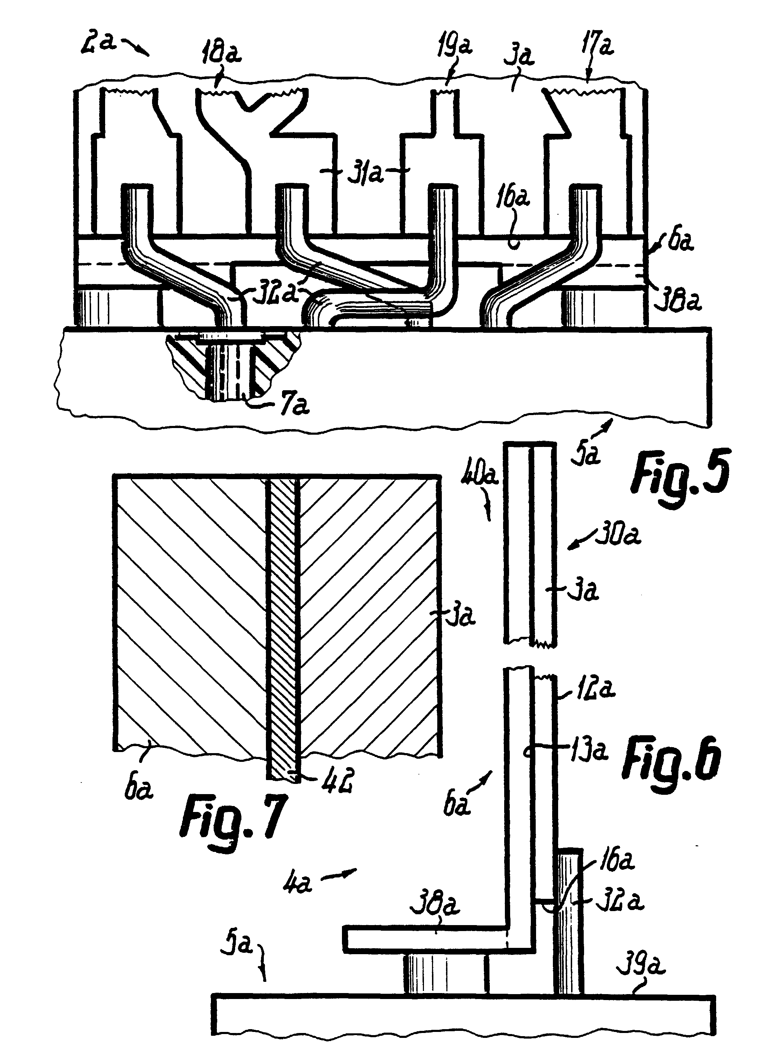

In den Fig. 5 bis 15 sind für einander entsprechende Teile die gleichen Bezugszeichen wie in den Fig. 1 bis 4, jedoch mit unterschiedlichen Buchstabenindizes verwendet, weshalb alle Beschreibungsteile sinngemäß für alle Ausführungsformen gelten und alle Ausführungsformen miteinander beliebig kombiniert werden können.

Gemäß den Fig. 5 bis 7 ist der Tragkörper 6a im wesentlichen durch ein Winkelprofil gebildet, dessen größerer Schenkel ein Wärmeleitblech bzw. einen Kühlkörper für das Wärmeleitglied 30a bildet, der somit in den Fühlteil des Temperatur- und Strömungsfühlers 40a einbezogen ist. Dieser Schenkel, der sich annähernd über die gesamte Plattenfläche der Basis 3a erstreckt, ist unter Zwischenlage einer sehr dünnen, thermischen Leitschicht 42 an der Plattenfläche 13a ganzflächig befestigt, wobei die Leitschicht 42 z.B. durch eine Wärmeleitpaste gebildet sein kann, welche die beiden Bauteile nach Art einer Haft- bzw. Lötverbindung verbindet. Der kürzere, in Ansicht außerhalb der Querkante 16a liegende Schenkel 38a ist von der Basis 3a weggerichtet und bildet zwei im Abstand nebeneinanderliegende Einzelschenkel, die jeweils an einem höckerartigen Vorsprung des Anschlußkörpers 5a befestigt sind, so daß der Schenkel 38a im Abstand vom Boden 39a liegt und wie die Zwischenverbindungen 32a ebenfalls von der Strömung beiderseits umspült werden kann.

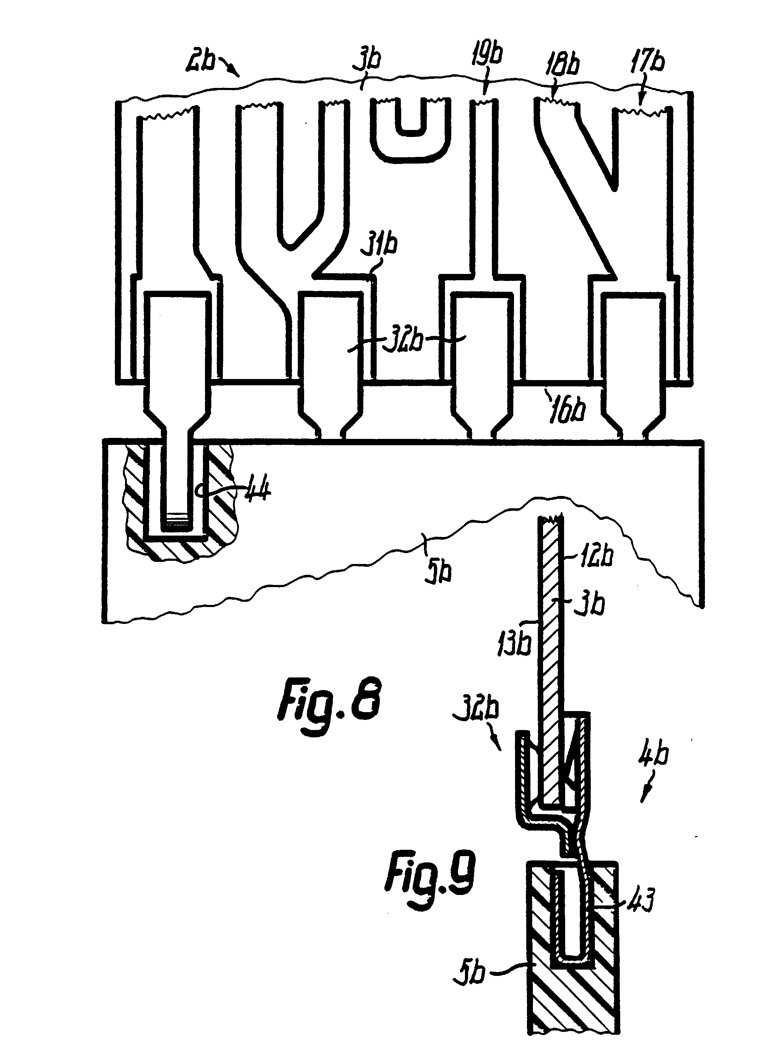

Gemäß den Fig. 8 und 9 ist kein gesonderter Tragkörper vorgesehen, sondern dieser unmittelbar durch die Zwischenverbindungen 32b und den Anschlußkörper 5b gebildet. Die Zwischenverbindungen 32b weisen nur einseitig an der Basis tragend befestigte Anschlußenden oder annähernd U-förmige Klammern auf, welche die Basis 3b an beiden Plattenflächen 12b, 13b klammerartig und vorgespannt von der Querkante 16b her umgreifen und alleine dadurch die tragende Verbindung zwischen Basis 3b und Anschlußkörper 5b herstellen. Jeweils ein Schenkel jeder Klammer bildet an seiner Innenseite eine Kontaktkralle, die in den zugehörigen Anschlußpol 31b eingreift und beim Aufstecken der Klammer quer zur Querkante 16b selbsttätig in Eingriff mit diesem Anschlußpol 31b gelangt. Im Anschluß an die Klammer weist die jeweilige Zwischenverbindung einen federnd spreizbaren Fußabschnitt 43 auf, der in eine an ihn angepaßte Tasche 44 des Anschlußkörpers 5b eingepreßt bzw. eingeschnappt und so angeordnet ist, daß er mit dem zugehörigen Anschlußglied leitend verbunden ist.

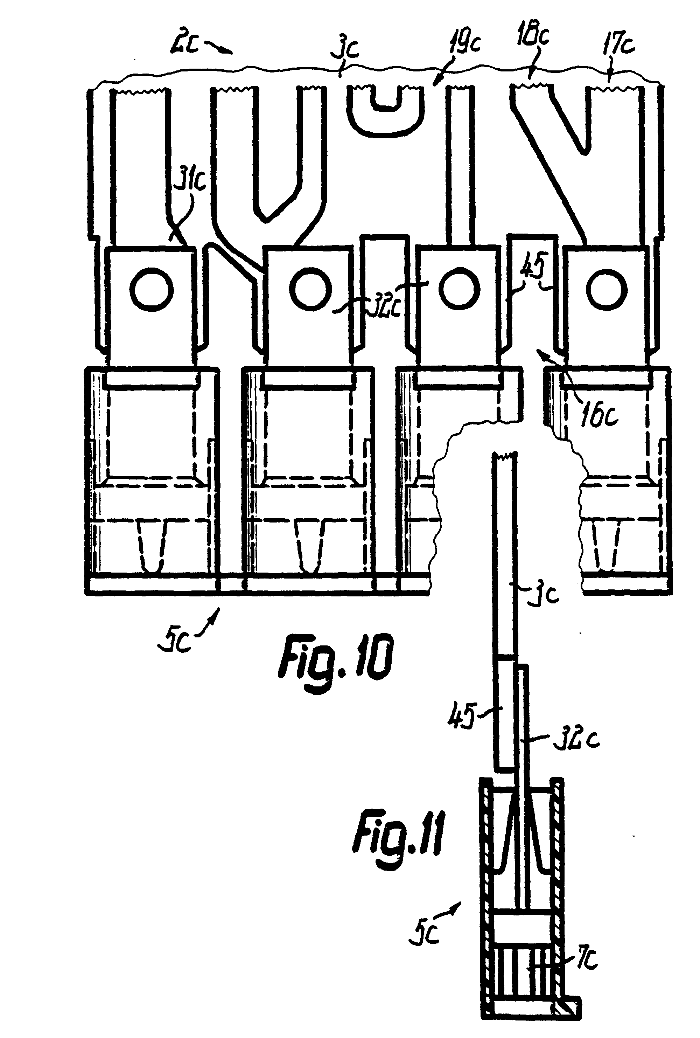

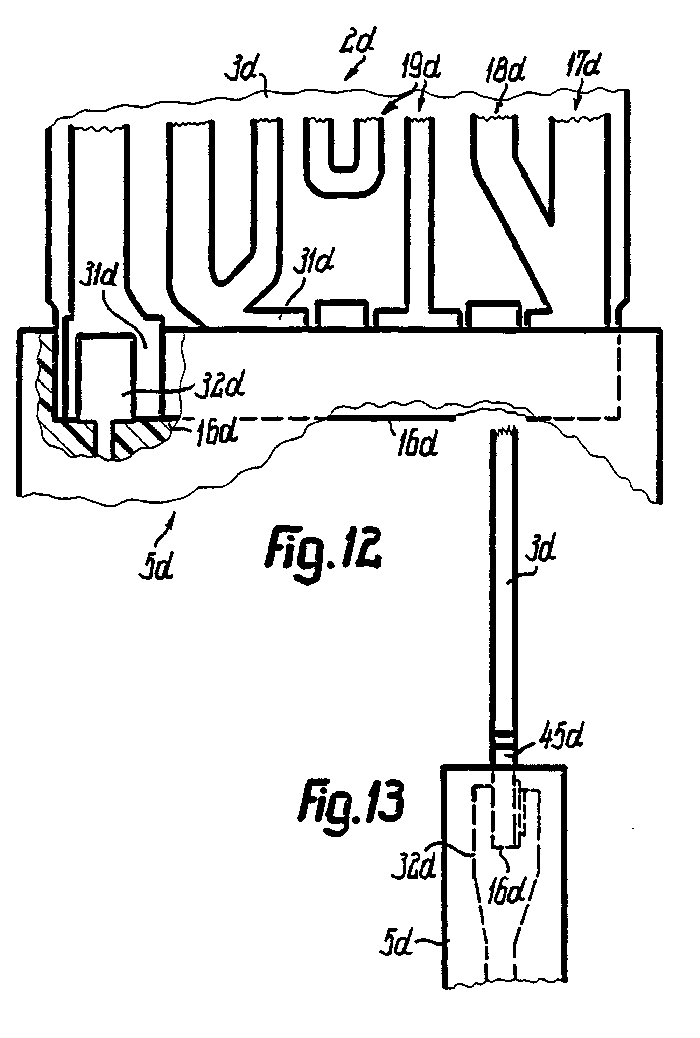

Gemäß den Fig. 10 und 11 bildet die Basis 3c im Bereich der kammartig ausgebildeten Querkante 16c im Abstand nebeneinander liegende Plattenvorsprünge 45, von denen jeder einen Anschlußpol 31c bzw. eine Zwischenverbindung 32c aufnimmt, die zweckmäßig durch eine der genannten Verbindungen lagestarr gegenüber der Basis 3c gesichert ist. Jede Zwischenverbindung 32c kann mit ihrem von der Basis 3c abgekehrten Ende unmittelbar das zugehörige Anschlußglied 7c bilden, so daß sich eine durchgehend einteilige Ausbildung ergibt. Benachbart zum Ende des jeweiligen Vorsprungs 45 ist die zugehörige, z.B. aus Blech gebogene oder als Stanzbiegeteil ausgebildete Zwischenverbindung 32c von einem Isoliergehäuse des Anschlußkörpers 5c umgeben, wobei jede Zwischenverbindung 32c ein gesondertes Isoliergehäuse aufweist und die Isoliergehäuse im Anschluß an die Basis 13 über den größten Teil ihrer Länge im Abstand nebeneinander liegen. An ihren von der Basis 3c entfernten Enden können die Isoliergehäuse einteilig miteinander verbunden sein, z.B. über Bruchstellen, so daß von einem Strang mit einer Vielzahl von Isoliergehäusen jeweils ein solches Stück durch Abbrechen abgetrennt werden kann, das die gewünschte Anzahl von Isoliergehäusen enthält. Die jeweilige Zwischenverbindung 32c ist durch Einstecken und Verkrallen im zugehörigen Isoliergehäuse im wesentlichen spielfrei lagegesichert, so daß keine weiteren Befestigungsmittel erforderlich sind.

Während gemäß den Fig. 1 bis 11 die Basis vollständig außerhalb des Anschlußkörpers liegt, liegt sie gemäß den Fig. 12 und 13 nur mit dem größten Teil ihrer Erstreckung außerhalb des Anschlußkörpers 5d, da ein der Querkante 16d zugehöriger Randstreifen der Basis 3d in eine entsprechende Schlitzöffnung des Anschlußkörpers 5d annähernd spielfrei lagegesichert so eingreift, daß im wesentlichen nur dadurch die tragende Verbindung hergestellt ist. Die Anschlußpole 31d liegen nahezu vollständig innerhalb des Anschlußkörpers 5d, dessen im wesentlichen vollständig in ihm versenkt liegende Zwischenverbindungen 32d Klammern sein können, die die Basis 3d einerseits gegen Abziehen sichern und andererseits die elektrische Leitungsverbindung zu den Anschlußgliedern herstellen. Durch eine einzige geradlinige Steckbewegung kann die Basis 3d einerseits mit dem Anschlußkörper 5d verbunden und andererseits die Schaltungseinheit 2d an die Anschlußglieder des Anschlußkörpers 5d angeschlossen werden. Die Basis 3d kann ebenfalls Vorsprünge 45d aufweisen, die in gesonderte Schlitztaschen des Anschlußkörpers 5d eingreifen.

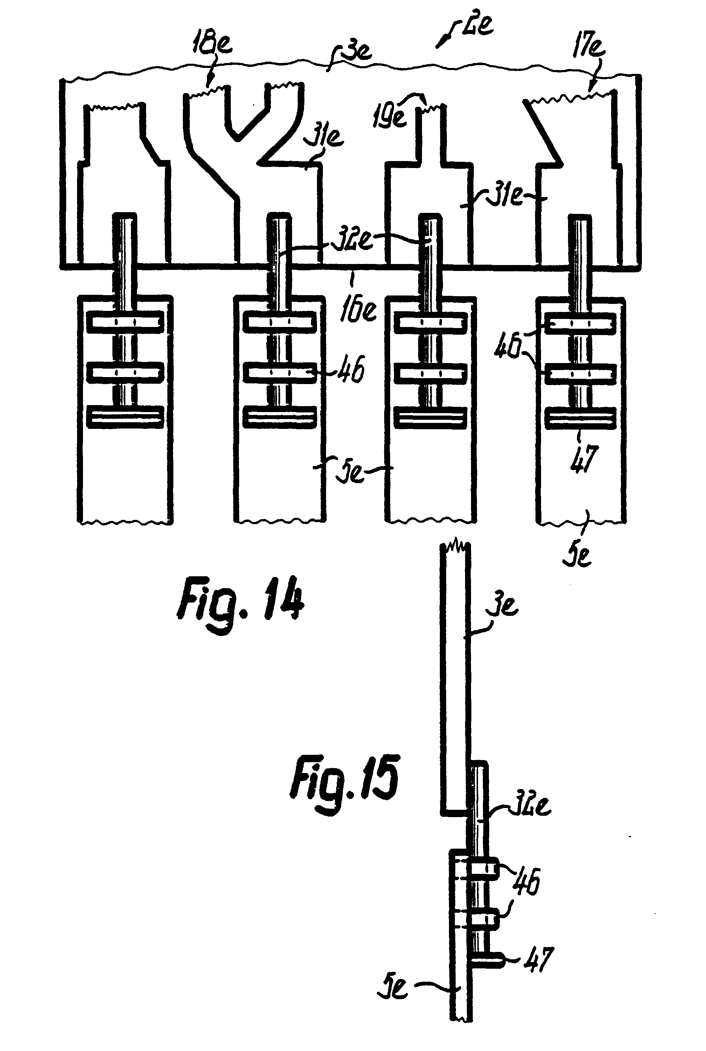

Gemäß den Fig. 14 und 15 sind die Zwischenverbindungen 32e durch geradlinige, zueinander parallele Drahtstücke gebildet, deren außerhalb der Querkante 16e liegende Enden jeweils mit einem gesonderten Anschlußkörper 5e leitend verbunden sind. Der jeweilige Anschlußkörper 5e besteht aus Metall, z.B. einem Flachbandprofil, das mit seinem von der Zwischenverbindung 32e abgekehrten Ende ein Anschlußglied, z.B. eine Flachsteckzunge, bilden kann, so daß alle Anschlußglieder in einer Ebene nebeneinander liegen. An dem der Querkante 16e zugekehrten und von dieser im Abstand liegenden Ende weist der jeweilige Anschlußkörper 5e zwei im Abstand hintereinander liegende Ösen auf, die durch Stanzschnitte und Herausbiegen aus der Materialebene einteilig mit dem Anschlußkörper 5e so ausgebildet sind, daß die jeweilige Zwischenverbindung 32e in sie eingesteckt und dann durch Verstemmen bzw. plastische Verformung lagegesichert werden kann. Im Abstand benachbart zur hinteren Öse 46 ist einteilig aus dem Anschlußkörper 5e ein Längsanschlag 47 herausgeformt gegen welchen die Zwischenverbindung 32e beim Einstecken in die Ösen 46 mit ihrem zugehörigen Ende anschlagen kann.

Ist für die Überwachungseinheit eine höhere als die genannte Betriebs- bzw. Überlastungstemperatur vorgesehen, so kann die die Basis einschließende Heizeinheit auf dem Tragkörper auch mit einem temperaturbeständigen Kleber befestigt werden, durch den ein Zerspringen der Basis im Versagensfall verhindert wird. Durch den Anschlußkörper ist der Tragkörper elektrisch isoliert angeordnet. Dadurch, daß die Verlustwärme in den verschiedenen Leistungsstufen symmetrisch zur Längsachse des Substrats freigesetzt wird, kann die erreichbare Flächenbelastung auf der Basis maximiert werden. Alle beschriebenen Eigenschaften können jeweils genau oder nur ungefähr bzw. im wesentlichen vorgesehen sein. Ferner kann jeder der beschriebenen Bauteile bzw. jede der Anordnungen jeweils nur ein einziges Mal oder in einer Mehrzahl vorgesehen sein, z.B. um über eine oder mehrere Schaltungseinheiten mehrere Verbraucher unabhängig voneinander betreiben zu können.

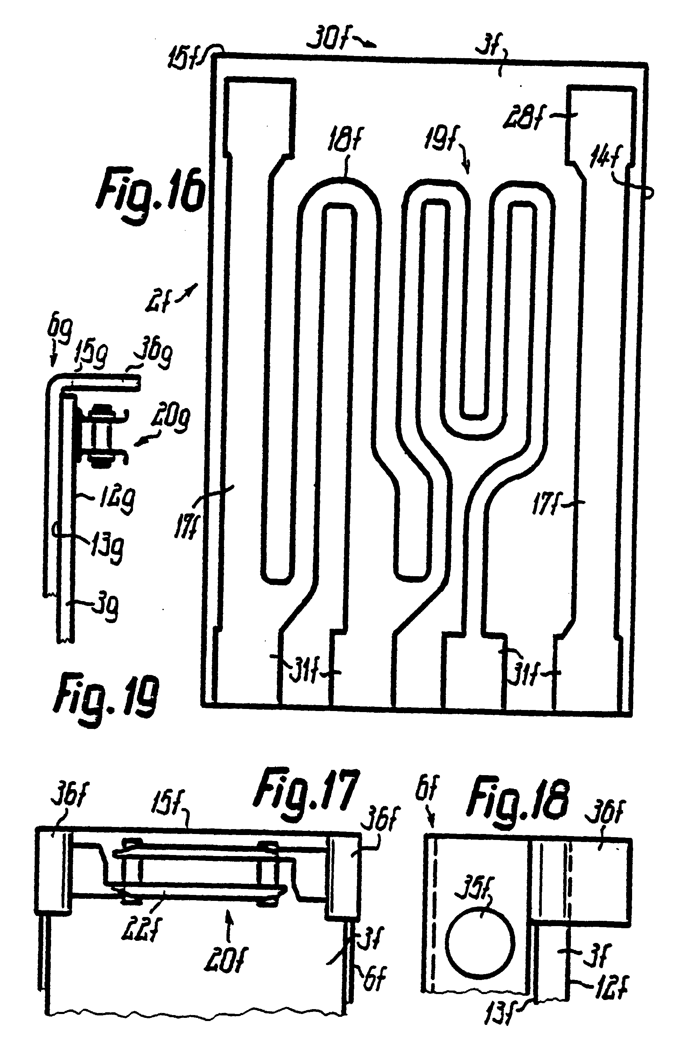

Gemäß Fig. 16 sind die im stoffschlüssigen Verbund mit dem Wärmeleitglied integrierten Widerstände 17f, 18f, 19f so angeordnet, daß die Anschlußpole 31f in der gleichen Reihenfolge wie die zugehörigen Anschlußglieder 7 am Anschlußkörper 5 angeordnet sind und keine einander kreuzenden Zwischenverbindungen 32 erforderlich sind. Dadurch ergibt sich zwar eine nicht ganz so symmetrische Wärmebelastung der Basis 3f in denjenigen Einstellungen, in denen nur der Widerstand 18f oder der Widerstand 19f betrieben wird, weil diese beiden Widerstände im wesentlichen vollständig benachbart zueinander liegen. Diese Ausbildung ist daher insbesondere für niedrigere Leistungsdichten als die Ausführungsform nach Fig. 1 geeignet, gegenüber welcher sie einfacher zu montieren bzw. herzustellen ist. Einige oder alle Widerstandsbögen, die benachbarte Schenkel des jeweiligen Widerstandes 18f, 19f verbinden, haben etwa gleiche Abstände von der Querkante 15f bzw. 16f. Die Widerstandsbögen des Widerstandes 19f können dadurch hier näher beim nicht näher dargestellten Schutzglied 20 liegen als bei der Ausführungsform nach Fig. 1.

Anstatt den jeweiligen Widerstand in eine keramische Vergußmasse einzubetten bzw. als Glühwendelwiderstand auszubilden, ist hier die Ausbildung als Filmheizleiter besonders zweckmäßig, wobei durch die große Breite der Leiterbahnen insbesondere erreicht werden kann, daß zwischen benachbarten Leiterbahnen oder zu einer bzw. zwei oder mehr Außenkanten 14f keine Abstände größer als 1 bis 2 mm gegeben sind.

Dadurch liegt der weitaus größte Teil aller Volumeneinheiten des Wärmeleitgliedes 30f nicht weiter als 1 mm vom Schichtheizleiter entfernt, wodurch das sehr gleichmäßige Aufheizen des zugehörigen Bauteiles gefördert und mechanische Spannungen während des Temperaturanstieges minimiert werden. Der jeweilige Widerstand kann auch eine ausreichend große PTC-Charakteristik haben, so daß der Strom im Fehlerfall auf Werte begrenzt wird, die für die Baueinheit nicht schädigend sind; in diesem Fall könnte ggf. auf einen Temperaturschutzschalter verzichtet werden. In der höchsten Verbrauchsstufe kann auch keiner der Vorwiderstände in Reihe mit dem Verbraucher geschaltet sein, sondern die zugehörige Zuleitung für den Verbraucher kann nur über die Anschlußpole 28f geschaltet sein, so daß der Temperaturschutzschalter bei entsprechender Stromempfindlichkeit auch dann eine Schutzabschaltung des elektromechanischen Energiewandlers bewirken kann.

Gemäß den Fig. 17 und 18 kann der Tragkörper 6 auch mindestens bis zur Querkante 15f reichen bzw. mit dieser fluchtend abschließen oder sogar über diese Querkante 15f vorstehen. Erfindungsgemäß ist für die Basis 3f bzw. die jeweilige Funktionseinheit 17f bis 20f ein stoß- und/oder Fallschutz mit mindestens einer mechanischen Abschirmung oder dgl. vorgesehen, die eine bis alle Außenkanten 14f bis 16f bzw. über die Basis 3f vorstehende Funktionseinheiten 20f an deren von der zugehörigen Plattenfläche 12f abgekehrten Seite wenigstens teilweise übergreift. Z.B. können die Klammern oder dgl. des Tragkörpers 6f seitlich die Längskanten 14f und die Enden der Funktionseinheit 20f übergreifende Schutzschilde 36f bilden, deren Enden einwärts abgewinkelt sein können und so die Funktionseinheit 20f an der genannten Seite übergreifen. Für diesen Flankenschutz ist statt gesonderter Bauteile insbesondere der Tragkörper 6 geeignet, da dessen seitliche Gehäuseschenkel über Teile oder ihre gesamte Länge als im Spaltabstand von der Basis 3f liegende Schutzschilde ausgebildet werden können.

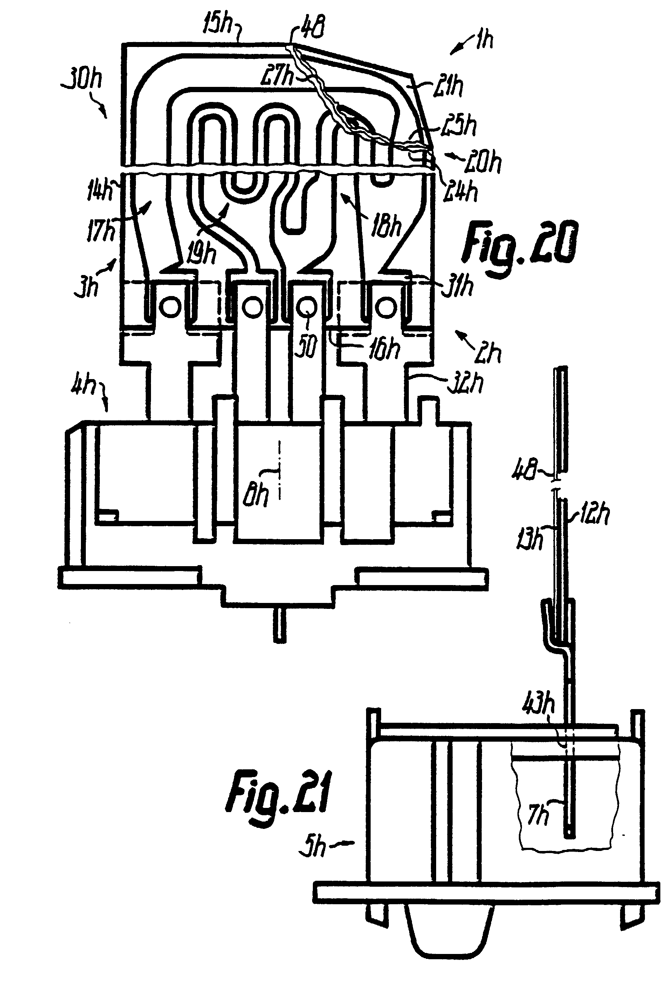

Stattdessen oder zusätzlich kann auch ein Fallschutz 36g gemäß Fig. 19 vorgesehen sein, bei welchem der ansonsten ebene bzw. plattenförmige Tragkörper 6g im Spaltabstand von der Außenkante 15g zu einem über die Plattenfläche 12g und die davon abgekehrte Seite der Funktionseinheit 20g vorstehenden ebenen Schenkel abgewinkelt ist. Der plattenförmige Tragkörper 6g ist im wesentlichen ganzflächig anliegend an der Plattenfläche 13g befestigt und kann nach Art eines Kühlbleches wirken.

Gemäß den Fig. 20 und 21 ist eine geringfügige Asymmetrie der Widerstandsanordnung gegenüber der Mittelebene 8h vorgesehen, wobei die beiden Widerstände 18h, 19h nebeneinander zwischen den Schenkeln des Widerstandes 17h bzw. im wesentlichen beiderseits der Mittelebene 8h liegen. Dadurch liegen die Längsabschnitte bzw. Schenkel des Widerstandes 18h ohne dazwischenliegenden weiteren Widerstand unmittelbar benachbart zueinander. Ein gesonderter Unterbrecher ist hier nicht vorgesehen, sondern unmittelbar durch Teile der Widerstandsanordnung bzw. des Trägers 3h oder des Wärmeleitgliedes 30h gebildet und daher kann der die Schenkel des Widerstandes 17h verbindende Quersteg einen Abstand von der Querkante 15h haben, der etwa in der Größenordnung des Abstandes der Schenkel von den Längskanten 14 liegt und kleiner als seine Breite ist.

In Fig. 20 ist die Steuereinheit lh im Zustand nach der Unterbrechung durch Überlastung bzw. Überhitzung dargestellt. Der näher beim Widerstand 18h liegende Eckbereich 21h zwischen den Kanten 14h, 15h ist durch Wärmespannungen von der übrigen Basis 3h mit Teilen der Widerstände 17h, 18h abgebrochen, so daß auch die Widerstände 17h, 18h in den Bereichen 24h, 25h der Sollbruchstelle 27h unterbrochen sind und sich so ohne jeglichen zusätzlichen Bauteil oder zusätzlichen Werkstoff ein Unterbrecher 20h ergibt. Das Bruchstück 21h ist gegenüber der übrigen Einheit 1h bzw. der Basis 3h durch eine mechanische Sicherung 48 gegen vollständiges Abfallen und Lösen so gesichert, daß es sich im Bereich der Sollbruchstelle 27h nur unter Bildung eines kleinen Spaltes ablöst und dabei unter seiner Gewichtskraft gelenkig in eine im wesentlichen fest bestimmte Ruhelage fällt, ohne an andere Bauteile in seiner Umgebung anzustoßen. Die Sicherung kann ein Elastomer, einen Silikonkleber, eine Harzschicht, eine flächige Armierungslage o.dgl. aus einem elektrisch isolierenden Werkstoff enthalten und im wesentlichen vollflächig z.B. an der Plattenfläche 13h angebracht sein. Vorteilhaft ist eine mit einer Harzschicht versehene Glasfasermatte mit einem Silikonkleber befestigt, wobei die Sicherung 48 stark progressiv zugelastische Eigenschaften aufweisen kann, so daß sie mit ihrem die Bruchstelle überbrückenden Bereich unter Zugspannung kommt und dadurch das Bruchstück 21a unter dieser Vorspannung federnd hält. Die das Spalt- bzw. Filmgelenk bildende Schicht 48 kann auch eine Kunststoff-Folie oder ein anderer Teil aus elektrisch isolierendem Werkstoff sein.

Die Trag- und Anschlußklammern der beiden seitlich äußersten Zwischenverbindungen 32h sind hinsichtlich ihrer auf beiden Seiten der Basis 3h liegenden Schenkel einteilig aus Blech o.dgl. ausgebildet. Ein mittlerer Schenkel liegt flächig am Anschlußpol 31h an und ist mit diesem durch eine Lötverbindung elektrisch leitend verbunden. Zwei seitliche Schenkel sind so zweifach abgewinkelt, daß sie an der davon abgekehrten Plattenfläche 13h, ggf. unter federnder Vorspannung, mit dem größten Teil ihrer Innenfläche anliegen, wobei ihre Schenkelenden so geringfügig nach außen abgewinkelt sind, daß sich eine trichterartig erweiterte Einführöffnung für den zugehörigen Randbereich der Basis 3h ergibt. Der streifenförmige Fußteil 43h durchsetzt eine Stirnwandung des Anschlußkörpers 5h, wodurch allein dessen tragende Verbindung mit dem Träger 4h gebildet ist, wobei das zugehörige Ende der einteiligen Zwischenverbindung 32 ein Anschlußglied 7h bildet. Die übrigen bzw. mittleren Zwischenverbindungen 32h können nur in eine Plattenseite 12h der Basis 3h eingreifen bzw. durch Lötung an den zugehörigen Anschlußpolen 31h befestigt sein. Um beim Löten das Lötmittel gut zwischen die zu verlötenden Flächen des Anschlußpoles 31h und des an diesem anliegenden Schenkels bringen zu können, ist dieser Schenkel im Bereich seiner Anlage- und Anschlußfläche von einer über den Umfang geschlossenen Öffnung 50 durchsetzt, durch welche das Lötmittel zwischen die Befestigungsflächen beim Lötvorgang zugeführt werden kann. Überschüssiges Lötmittel kann sich in dieser Öffnung 50 sammeln und dort erstarren.

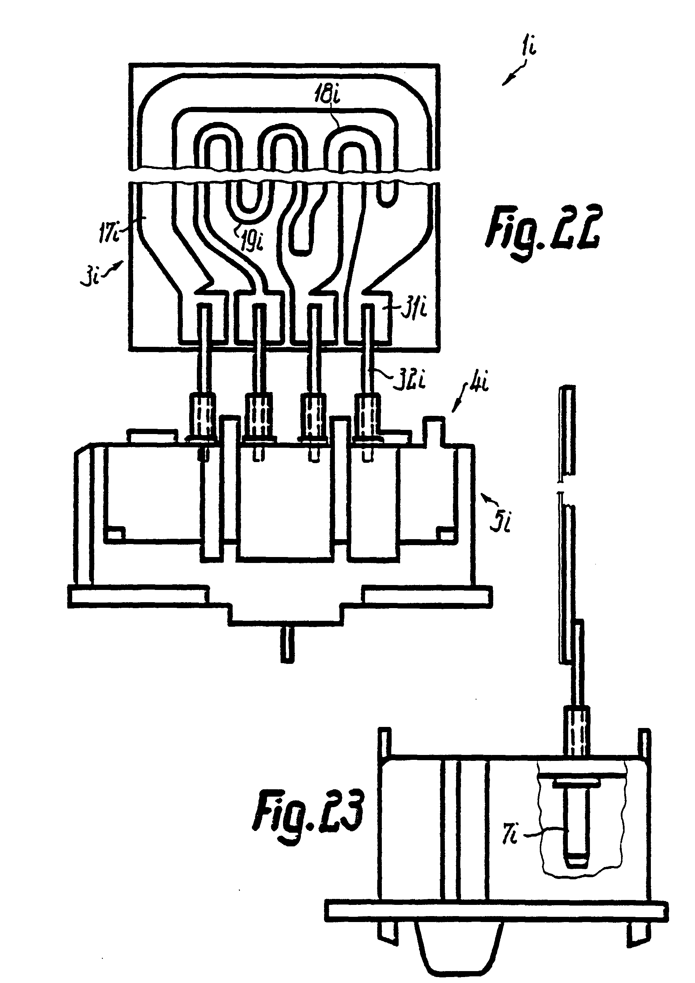

Bei der Ausführungsform nach den Fig. 22 und 23 weisen die Zwischenverbindungen 32i verzinkte Kupferdrahtstäbe auf, welche mit einem Ende am jeweils zugehörigen Anschlußpol 31i mit ihrer Mantelfläche durch eine Lötverbindung befestigt sind und deren anderes Ende im wesentlichen radialspielfrei eine Hülse durchsetzt, welche in der Stirnwand des Anschlußkörpers 5i so befestigt ist, daß sie berührungsfrei gegen die Basis 3i vorsteht. In dieser Hülse kann der Stab durch Schweißung o.dgl. befestigt sein und die Hülse kann mit ihrem anderen Ende das z.B. als Steckerstift ausgebildete und in einer Gegenstecker-Öse aufzunehmende Anschlußglied 7i bilden.

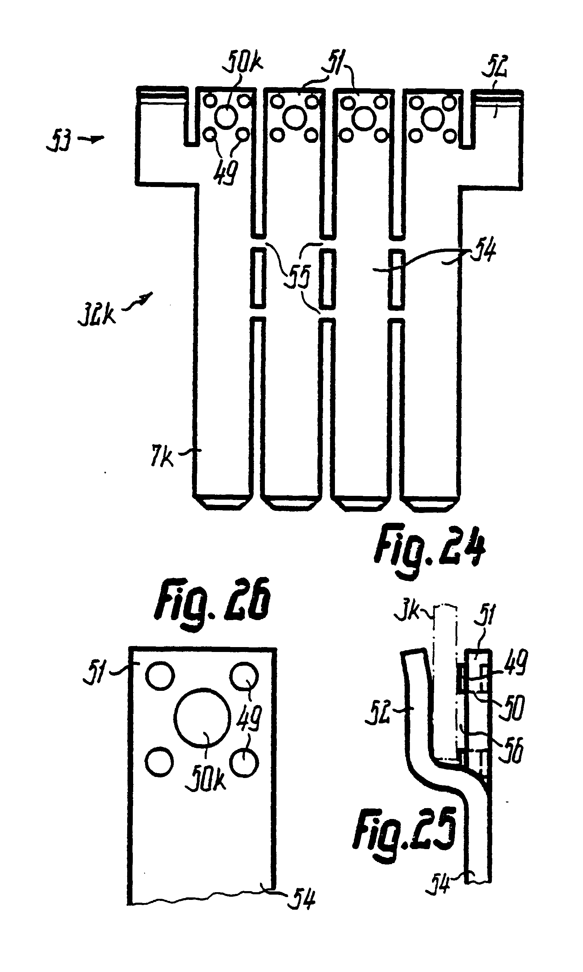

Gemäß den Fig. 24 und 25 ist die Zwischenverbindung 32k einschließlich der Anschlußglieder 7k zunächst durch einen einstückigen Stanzbiegeteil aus Blech o.dgl. gebildet, der vor bzw. nach Trennung der einzelnen Zwischenverbindungen an der Basis befestigt werden kann. Dieser Bauteil weist einen seitlich über die Anschlußpole verbreiteten Kopfabschnitt 53 auf, welcher für jeden Anschlußpol eine annähernd quadratische Anschlußplatte 51 sowie seitlich außerhalb der äußersten Anschlußplatten 51 jeweils einen Klemmschenkel bzw. eine Lasche zum Eingriff in die von den ebenengleichen Platten 51 abgekehrte Seite der Basis aufweist. Dadurch kann die Basis anschlagbegrenzt, formschlüssig sowie kraftschlüssig mit dem Bauteil 32k nach Art einer Vorheftung seitlich verschiebbar verbunden werden, die dann durch die genannten Lötverbindungen ergänzt wird. Jede Platte 51 geht mit etwa konstanter Breite und Dicke in eine streifenförmige Leiterschiene 54 über, welche mit ihrem von der Platte 51 abgekehrten Ende das zugehörige Anschlußglied 7k bildet. Benachbarte Platten 51, Schienen 54 bzw. Anschlußglieder 7k sind über Querstege 55 einteilig miteinander verbunden und nur durch diese Zwischenverbindungen gegeneinander lagegesichert. Zur Verbindung können jeweils zwei in Längsrichtung im Abstand hintereinander liegende Stege 55 vorgesehen sein, die jeweils eine maximale Querschnittserstreckung von höchstens etwa einem Millimeter haben und daher nach Art von Sollbruchstellen durch Biege- bzw. Scherbruch z.B. beim Einsetzen in den Bauteil 4, 5 so durchtrennt werden können, daß die Schienen 54 elektrisch voneinander getrennt sind.

Jeder Anschlußkopf 51 weist mehrere, z.B. vier an den Ecken eines gedachten Rechteckes bzw. Quadrates im Abstand voneinander liegende Vorsprünge oder Nocken 49 auf, die aus der Platte 51 so ausgeprägt sind, daß sie gegen die Basis bzw. die Anschlußpole um wenige, z.B. etwa zwei Zehntel Millimeter vorstehen. Diese Distanznocken 49 liegen dann an der zugehörigen Plattenfläche bzw. nur am zugehörigen Anschlußpol an, so daß zwischen diesem und der zugekehrten Plattenfläche des Anschlußkopfes 51 ein Spalt 56 entsprechender Spaltdicke gebildet ist. Etwa in der Mitte zwischen dem einteilig mit der Platte 51 ausgebildeten Nocken 49 liegt die gegenüber diesen wesentlich weitere Öffnung 50, die unmittelbar an den Lötspalt 56 anschließt. Die Platten 51 liegen jeweils etwa in einer Ebene mit der zugehörigen Schiene 54 bzw. dem Anschlußglied 7k.

## Patentansprüche

1. Widerstands-Einheit, insbesondere Überwachungseinheit, für einen Leistungs-Verbraucher, wie ein elektrisches Gebläse, einen Scheibenwischermotor oder dgl., mit einem Träger (4), mindestens einem elektrischen Leiter, welcher einen ggf. zur Abgabe eines thermischen Überwachungssignales ausgebildeten Widerstand (17 bis 19) umfaßt und mit auf das Überwachungssignal o.dgl. ansprechenden Schutzmitteln (29), die wärmeleitend mit dem Widerstand (17 bis 19, 41) thermisch gekoppelt sind, wobei mindestens ein mit den Schutzmitteln (29) thermisch gekoppelter Widerstand (17 bis 19, 41) als Vorwiderstand für den Leistungs-Verbraucher angeordnet ist, dadurch gekennzeichnet, daß mindestens ein Leiter zur Wärmeleitung bis an die Schutzmittel (29) reicht.

2. Einheit nach Anspruch 1, dadurch gekennzeichnet, daß zur wärmeleitenden Koppelung ein Wärmeleitglied (30) aus im wesentlichen druckfest formstabilem Substrat, wie Keramik bzw. Al₂O₃ oder dgl., vorgesehen ist, daß insbesondere ein Wärmeleitglied (30) im wesentlichen entlang einer Oberfläche (12, 13) einen Wärmeleitweg zu einem Schutzglied (29) bildet und daß vorzugsweise ein Wärmeleitglied (30) langgestreckt bzw. plattenförmig ist, beispielsweise eine Querschnittserstreckung von weniger als 5 mm aufweist.

3. Einheit nach Anspruch 1 oder 2, dadurch gekennzeichnet, daß mindestens ein Widerstand (17 bis 19) als auf einer Isolierfläche (12) angeordneter Schichtwiderstand ausgebildet ist, daß insbesondere eine Isolierfläche (12) durch ein Wärmeleitglied (30) gebildet ist und daß vorzugsweise ein Schutzglied (29) im wesentlichen ausschließlich von einem Wärmeleitglied (30) getragen ist.

4. Einheit nach einem der vorhergehenden Ansprüche, dadurch gekennzeichnet, daß mehrere Widerstände (17 bis 19) als Vorwiderstand für einen Verbraucher vorgesehen ist, daß insbesondere mehrere Leistungsstufen für einen Verbraucher vorgesehen sind und daß vorzugsweise mindestens zwei gesondert schaltbare Widerstände (17 bis 19) im wesentlichen über ein gemeinsames Wärmeleitglied (30) mit einem Schutzmittel (29) thermisch gekoppelt und/oder mit elektrischen Unterbrechermitteln (20) in Reihe geschaltet sind.

5. Einheit nach einem der vorhergehenden Ansprüche, dadurch gekennzeichnet, daß ein Wärmeleitglied (30) zur Aufnahme mindestens eines Widerstandes (17 bis 19) ein Aufnahmefeld bildet, das annähernd bis zu einem Schutzmittel (29) im wesentlichen gleichmäßig mit dem Widerstand (17 bis 19) besetzt und thermisch gekoppelt ist, daß insbesondere ein Widerstand (17 bis 19) auf derselben Seite eines Wärmeleitgliedes (30) wie ein Schutzglied (29) liegt und daß vorzugsweise ein Widerstand (17 bis 19) mindestens zwei Anschlußpole (31) bildet, die im Bereich einer von dem Schutzmittel (29) weiter entfernten Außenkante (16) eines Wärmeleitgliedes (30) liegen und/oder daß von mindestens zwei Widerständen (17 bis 19) mit unterschiedlichen Widerstandswerten ein niedrigerer Widerstand (17) einen zwischen seine Enden zwischengeschalteten Unterbrecher (20) aufweist und wenigstens ein höherer Widerstand (18, 19) in Reihe mit dem niedrigeren Widerstand geschaltet ist, daß insbesondere mindestens zwei Widerstände (17 bis 19) in Ansicht auf ein Wärmeleitglied (30) ineinanderliegen und daß vorzugsweise im wesentlichen alle Widerstände (17 bis 19) etwa parallel zueinander bzw. ineinander liegende Streifenbahnen bilden.

6. Einheit nach einem der vorhergehenden Ansprüche, dadurch gekennzeichnet, daß sie mindestens einen von einem Schutzglied (29) zu betätigenden Unterbrecher (20) aufweist, daß insbesondere ein Unterbrecher (20) mit einem Schutzglied (29) bzw. einem Wärmeleitglied (30h) eine in sich geschlossene Baueinheit bildet und daß vorzugsweise ein Unterbrecher (20) nach Öffnung selbstschließend bzw. als Zerstörungssicherung ausgebildet ist und/oder daß ein Unterbrecher (20h) durch eine thermische Sollbruchzone eines Widerstandes (17h, 18h) bzw. eines Widerstandsträgers (3h) gebildet ist, daß insbesondere Sicherungsmittel (48) zur Lagesicherung eines über eine Bruchstelle (27h) abtrennenden Bruchstückes (21h) vorgesehen sind und daß vorzugsweise ein Wärmeleitglied (30h) wenigstens in einem eine Sollbruchstelle (27h) überbrückenden Bereich mit einer flexiblen Verbundschicht (48) versehen ist.

7. Einheit nach einem der vorhergehenden Ansprüche, dadurch gekennzeichnet, daß ein Unterbrecher (20) im wesentlichen unmittelbar von einem Wärmeleitglied (30) getragen und/ oder gebildet ist, daß insbesondere ein Unterbrecher (20) im wesentlichen ausschließlich über mindestens ein elektrisches Anschlußelement (27) lagegesichert ist und daß vorzugsweise ein Unterbrecher (20) an derselben Seite eines Wärmeleitgliedes (30) wie wenigstens ein Widerstand (17 bis 19, 41) bzw. ein Unterbrecher (20) auf einer von mindestens einem Anschlußpol (31) eines Widerstandes (17 bis 19) entfernten Seite eines Aufnahmefeldes für den Widerstand (17 bis 19) vorgesehen ist, und oder daß ein Unterbrecher (20) einen Sockel (21) mit einem unterbrechbaren elektrischen Leitungsweg aufweist, daß insbesondere der Sockel (21) ein Schutzglied (29) trägt und daß vorzugsweise ein Sockel (21) durch unmittelbare Verbindung mit einem Wärmeleitglied (30) ein wärmeleitendes Verbindungsglied zwischen einem Schutzglied (29) und dem Wärmeleitglied (30), einen elektrischen Anschluß (27) für den Leitungsweg bzw. eine Lagesicherung gegenüber dem Wärmeleitglied (30) bildet.

8. Einheit nach einem der vorhergehenden Ansprüche, dadurch gekennzeichnet, daß mindestens ein Wärmeleitglied (30) auf wenigstens einer Seite (12, 13) im wesentlichen frei liegt, daß insbesondere ein Umgebungsfühler (40) für eine Umgebungstemperatur, eine Strömung oder dgl. vorgesehen ist und daß vorzugsweise ein Wärmeleitglied (30) bzw. wenigstens ein Widerstand (17 bis 19) einen einer Fluidbewegung ausgesetzten Fühler (40) zur Steuerung eines Unterbrechers (20) bildet und/oder daß einem Wärmeleitglied (30), mindestens einem Widerstand (17 bis 19) bzw. einem Schutzglied (20) eine Kühleinrichtung zugeordnet ist, daß insbesondere ein Befestigungsglied (5) zur im wesentlichen frei in einen Fluidkanal (10) ragenden Befestigung eines Wärmeleitgliedes (30) vorgesehen ist und daß vorzugsweise einem Wärmeleitglied (30a) mindestens ein gesonderter Kühler bzw. ein Halter (4) zugeordnet ist.

9. Einheit nach einem der vorhergehenden Ansprüche, dadurch gekennzeichnet, daß mindestens eine Oberfläche eines Wärmeleitgliedes (30), eines Widerstandes (17 bis 19), eines Schutzgliedes (29) bzw. eines Unterbrechers (20) als Wärmetauschfläche angeordnet ist, daß insbesondere ein Wärmeleitglied (30) einen perforierten Kühlluftschacht im wesentlichen im Bereich einer Mantelfläche begrenzt und daß vorzugsweise ein Halter (4) im wesentlichen nur im Randbereich bzw. an einer von einem Widerstand (17 bis 19) abgekehrten Seite über eine Wärmeleitschicht (42) in Eingriff mit einem Wärmeleitelement (30, 30a) steht und/oder daß ein Träger (4) im wesentlichen über mindestens ein steckbares Befestigungsglied mit einem Wärmeleitglied (30) verbunden ist, daß insbesondere ein Wärmeleitglied (30) im wesentlichen frei außerhalb eines Trägers (4) liegt und daß vorzugsweise ein Wärmeleitglied (30) durch unmittelbaren Eingriff bzw. über einen Schenkel (38) eines Halters (4) mit einem Tragsockel (5) verbunden ist.

10. Einheit nach einem der vorhergehenden Ansprüche, dadurch gekennzeichnet, daß ein Träger (4) einen Steckkörper zum lagegesicherten Eingriff in eine Öffnung (11) bildet und in Steckrichtung gesehen im wesentlichen allseits seitlich über mindestens ein Wärmeleitglied (30), wenigstens einen Widerstand (17 bis 19), ein Schutzglied (29), einen Unterbrecher (20) bzw. einen Halter (6) vorsteht, daß insbesondere mindestens ein zur Herstellung einer Anschlußverbindung mit einer externen Versorgungsleitung zugängliches Anschlußglied (7) vorgesehen ist bzw. ein Träger (4) einen mindestens ein Anschlußglied (7) aufweisenden Anschlußkörper (5) für den elektrischen Anschluß der Überwachungseinheit (1) bildet und daß vorzugsweise ein Träger (5) als napf förmiges Gehäuse ausgebildet ist, welches an der Außenseite einer Bodenwand (39) vorstehend ein Wärmeleitglied (30) bzw. in der Napföffnung zugängliche Anschlußglieder (7) für einen Sammelstecker oder dgl. trägt, und/oder daß mindestens ein an einem Widerstand anzuschließendes Anschlußstück (32k) einen Steckkopf (53) bildet, daß insbesondere ein Anschlußstück (32k) eine einen Widerstandsträger umgreifende Gabel bildet und daß vorzugsweise eine Anschlußfläche eines Anschlußstückes (32k) vorspringende Nocken (49) zur Bildung eines Lötspaltes bzw. eine Durchgangsöffnung (50) zur Einbringung von Lötmittel aufweist.

11. Einheit nach einem der vorhergehenden Ansprüche, dadurch gekennzeichnet, daß einem Unterbrecher (20) für eine Schaltstellung eine gesondert abzuschaltende Selbsthaltung (41) zugeordnet ist, daß insbesondere einem Schutzglied (29) eine Selbsthalte-Beheizung (41) zugeordnet ist und daß vorzugsweise im wesentlichen in Deckung mit einer ein Schutzglied (29) tragenden Baueinheit (20) bzw. in Parallelschaltung zu einem Unterbrecher (20) auf einem Wärmeleitglied (30) ein Heizwiderstand (41) vorgesehen ist, der einen höheren Widerstand als der Unterbrecher (20) im Einschaltzustand aufweist und/oder ein mäanderförmig auf ein Wärmeleitglied (30) aufgebrachter Schichtwiderstand bzw. in Reihe mit einem Vorwiderstand (17) geschaltet ist.

## Claims

1. A resistor unit, in particular, a unit for monitoring a power consumer such as an electrical blower, a windscreen wiper motor or the like, comprising a support (4), at least one electrical conductor comprising a resistor (17 to 19) configured, where necessary, for outputting a thermal monitoring signal and including protective means (29) responding to the monitoring signal or the like, said protective means (29) being thermally coupled heat-conductively to said resistor (17 to 19, 41), at least one resistor (17 to 19, 41) thermally coupled to said protective means (29) being arranged as a dropping resistor for said power consumer, characterized in that at least one conductor for heat conduction extends up to said protective means (29).

2. The unit as set forth in claim 1, characterized in that for heat conductive coupling a heat conducting member (30) having a substantially non-compressible, dimensionally stable substrate, such as a ceramic or A1203 or the like is provided, more particularly a heat conducting member (30) forming substantially along a surface (12, 13) a heat conducting path to a protective member (29) and preferably a heat conducting member (30) being elongated or plate-shaped comprising, for example a cross sectional extent of less than 5 mm.

3. The unit as set forth in claim 1 or claim 2, characterized in that at least one resistor (17 to 19) is configured as a film resistor arranged on an insulating surface area (12), more particularly an insulating surface area (12) being formed by a heat conducting member (30) and preferably a protective member (29) being supported substantially exclusively by a heat conducting member (30).

4. The unit as set forth in any of the preceding claims, characterized in that several resistors (17 to 19) are provided as a dropping resistor for a consumer, more particularly several power stages being provided for a consumer and preferably at least two separate switchable resistors (17 to 19) being thermally coupled substantially via a common heat conducting member (30) to a protective means (29) and/or connected in series with electrical interrupter means (20).

5. The unit as set forth in any of the preceding claims, characterized in that a heat conducting member (30) for mounting at least one resistor (17 to 19) forms a mounting zone occupied more or less up to a protective means (29) substantially uniformly by said resistor (17 to 19) and thermally coupled, more particularly one resistor (17 to 19) being located on the same side of a heat conducting member (30) as a protective means (29) and preferably one resistor (17 to 19) forming at least two connecting poles (31) located in the region of an outer edge (16) of a heat conducting member (30) further remote from said protective means (29) and/or of at least two resistors (17 to 19) having differing resistance values a lower resistor (17) comprises an interrupter (20) connected between its ends and at least one higher resistor (18, 19) connected in series to said lower resistor, more particularly at least two resistors (17 to 19) being nested as viewing a heat conducting member (30) from the side and preferably substantially all resistors (17 to 19) forming strip paths located roughly parallel to or in each other.

6. The unit as set forth in any of the preceding claims, characterized by it comprising at least one interrupter (20) to be actuated by a protective member (29), more particularly an interrupter (20) forming together with a protective member (29) or a heat conducting member (30h) a self-contained module and preferably an interrupter (20) being configured self-closing after opening or as a destruct fuse and/or an interrupter (20h) being formed by a thermal design break zone of a resistor (17h, 18h) or of a resistor support (3h), more particularly positional locating means (48) being provided for positionally locating a break piece (21h) to be separated via a break location (27h) and preferably a heat conducting member (30h) being provided at least in a portion bridging a design break location (27h) with a flexible compound layer (48).

7. The unit as set forth in any of the preceding claims, characterized in that an interrupter (20) is supported and/or formed substantially directly by a heat conducting member (30), more particularly an interrupter (20) being positionally located substantially exclusively by at least one electrical contact element (27) and preferably an interrupter (20) being provided on the same side of a heat conducting member (30) as at least one resistor (17 to 19, 41) or an interrupter (20) on one side of a mounting zone for said resistor (17 to 19) remote from at least one connecting pole (31) of a resistor (17 to 19), and/or that an interrupter (20) comprises a base (21) having an interruptable electrical conduction path, more particularly said base (21) supporting a protective member (29) and preferably a base (21) forming by direct connection to a heat conducting member (30) a heat conducting contact member between a protective member (29) and said heat conducting member (30), an electrical contact (27) for said conducting path or a positioning locator relative to said heat conducting member (30).

8. The unit as set forth in any of the preceding claims, characterized in that at least one heat conducting member (30) is located on at least one side (12, 13) substantially freely, more particularly a sensor (40) for sensing an ambient temperature, a flow or the like being provided and preferably a heat conducting member (30) or at least one resistor (17 to 19) forming a sensor exposed to a fluid movement for controlling an interrupter (20) and/or that a cooling means is assigned to a heat conducting member (30), at least one resistor (17 to 19) or a protective member (29), more particularly a fastener member (5) being provided securing a heat conducting member (30) by protruding substantially freely into a fluid passage (10) and preferably at least one separate heat sink or a mount (4) being assigned to a heat conducting member (30a).

9. The unit as set forth in any of the preceding claims, characterized in that at least one surface of a heat conducting member (30), a resistor (17 to 19), a protective member (29) or interrupter (20) is arranged as a heat exchanger surface area, more particularly a heat conducting member (30) defining a perforated cooling air chute substantially in the region of a shell surface area and preferably a mount (4) engaging a heat conducting element (30, 30a) substantially only in the edge portion or on a side facing away from a resistor (17 to 19) via a heat conducting layer (42) and/or that a support (4) is connected substantially via at least one plug-in fastener member to a heat conducting member (30), more particularly a heat conducting member (30) being located substantially freely outside of a support (4) and preferably a heat conducting member (30) being connected by direct engagement or via one leg (38) of a mount (4) with a supporting base (5).

10. The unit as set forth in any of the preceding claims, characterized in that a support (4) forms a plug-in base for engaging an opening (11) positionally located and as viewed in the plug-in direction protrudes substantially on all sides beyond at least one heat conducting member (30), at least one resistor (17 to 19), a protective member (29), an interrupter (20) or a mount (6), more particularly at least one contact member (7) accessible for producing a connection to an external supply cable being provided or one support (4) forming a contact body (5) comprising at least one contact member (7) for electrically connecting said monitoring unit and preferably a support (5) being configured as a dish-shaped housing supporting protruding from the outer side of a bottom wall (39) a heat conducting member (30) or contact members (7) accessible in the dished opening for a header plug or the like, and/or that at least one terminal (32k) to be connected to a resistor forms a plug-in head (53), more particularly a terminal (32k) forming a fork clasping a resistor support and preferably a contact surface area of a terminal (32k) comprising protruding cams (49) for forming a solder gap or a passage opening (50) for applying solder means.

11. The unit as set forth in any of the preceding claims, characterized in that to an interrupter (20) for a switching position is assigned a self-hold (41) to be switched off separately, more particularly a protective member (29) being assigned a self-hold heating and preferably a heating resistor (41) being provided substantially coinciding with a module (20) supporting a protective member (29) or connected in parallel to an interrupter (20) on a heat conducting member (30), said heating resistor (41) featuring a higher resistance than said interrupter (20) in the ON condition and/or a film resistor applied meander-shaped on a heat conducting member (30) being connected in series with a dropping resistor (17).

## Revendications

1. Unité de résistance, notamment unité de contrôle pour un consommateur de puissance ou dissipateur, comme un ventilateur électrique, un moteur d'essuie-glace ou semblable, avec un support (4), au moins un conducteur électrique, lequel comporte une résistance (de 17 à 19) éventuellement formée pour donner un signal de contrôle thermique et avec des moyens de protection (29) réagissant au signal de contrôle ou semblable, lesquels sont accouplés thermiquement de manière conduisant la chaleur avec la résistance (de 17 à 19, 41), au moins une résistance (de 17 à 19, 41), accouplée thermiquement avec les moyens de protection (29) étant disposée comme résistance série pour le consommateur de puissance, **caractérisé en ce qu**'au moins un conducteur pour la conduction de chaleur s'étend jusqu'aux moyens de protection (29).

2. Unité selon la revendication 1, **caractérisé en ce que,** pour l'accouplement conduisant la chaleur, est prévu un élément de conduction de chaleur (30) d'un substrat essentiellement indéformable à l'épreuve de pression, tel que céramique respectivement Al₂O₃ ou semblable, en ce que notamment un élément de conduction de chaleur (30) forme essentiellement au long d'une surface (12, 13) une voie de conduction de chaleur vers un élément de protection (29) et **en ce que** de préférence un élément de conduction de chaleur (30) est allongé ou encore en forme de plaque, par exemple présente une étendue de coupe transversale de moins de 5 mm.

3. Unité selon la revendication 1 ou 2, **caractérisé en ce que** au moins une résistance (de 17 à 19) est formée comme résistance à couche disposée sur une surface d'isolation (12), **en ce que** notamment une surface d'isolation (12) est formée par un élément de conduction de chaleur (30) et en ce que de préférence un élément de protection (29) est porté essentiellement exclusivement par un élément de conduction de chaleur (30).

4. Unité selon une des revendications précédentes, **caractérisé en ce que** plusieurs résistances (de 17 à 19) est prévue comme résistance série pour un consommateur, **en ce que** notamment plusieurs niveaux de puissance sont prévues pour un consommateur et **en ce que** de préférence au moins deux résistances (de 17 à 19) commandables séparément sont accouplées thermiquement essentiellement par un élément de conduction de chaleur (30) commun avec un moyen de protection (29) et/ou sont couplées en série avec des moyens d'interruption (20) électriques.

5. Unité selon une des revendications précédentes, **caractérisé en ce que** un élément de conduction de chaleur (30), pour le logement d'au moins une résistance (de 17 à 19), forme un champ de logement, lequel est occupé et thermiquement accouplé environ jusqu'à un moyen de protection (29) essentiellement de façon uniforme avec une résistance (de 17 à 19), **en ce que** notamment une résistance (de 17 à 19) se trouve sur le même côté d'un élément de conduction de chaleur (30) comme une élément de protection (29) et **en ce que** de préférence une résistance (de 17 à 19) forme au moins deux pôles de connexion (31), lesquels se trouvent dans le domaine d'un bord extérieur (16) plus éloigné du moyen de protection (29), d'un élément de conduction de chaleur (30) et/ou en ce que d'au moins deux résistances (de 17 à 19) avec des valeurs de résistance différentes, une résistance (17) plus basse présente un interrupteur ou disjoncteur ou dispositif d'interruption (20) intercalé entre ces extrémités et au moins une résistance (18, 19) plus haute est couplée en série avec la résistance plus basse, **en ce que** notamment au moins deux résistances (de 17 à 19) se trouvent l'une dans l'autre en projection sur un élément de conduction de chaleur (30) et **en ce que** de préférence essentiellement toutes les résistances (de 17 à 19) forment des bandes à ruban environ parallèles l'une envers l'autre respectivement se trouvant l'une dans l'autre.

6. Unité selon une des revendications précédentes, **caractérisé en ce qu**'elle présente au moins un interrupteur (20) actionnable par un élément de protection (29), **en ce que** notamment un interrupteur (20) avec un élément de protection (29) respectivement un élément de conduction de chaleur (30h) forme une unité de construction autonome et **en ce que** de préférence un interrupteur (20) est exécuté à réenclenchement automatique après l'ouverture respectivement comme dispositif de protection à destruction et/ou **en ce que** un interrupteur (20h) est formé par une zone thermique destinée à la rupture, d'une résistance (17h, 18h) respectivement d'un support de résistance (3h), en ce que notamment des moyens de protection (48) sont prévus pour l'assurage de positionnement d'un fragment (21h) séparable par un point ou place de rupture (27h) et **en ce que** de préférence un élément de conduction de chaleur (30h) est pourvu au moins dans un champ pontant un point ou une place destinée à la rupture (27h) d'une couche combinée ou composite (48) flexible.

7. Unité selon une des revendications précédentes, **caractérisé en ce que** un interrupteur (20) est porté et/ou formé essentiellement directement par un élément de conduction de chaleur (30), **en ce que** notamment un interrupteur (20) est assuré dans son positionnement essentiellement exclusivement par au moins un élément de connexion (27) électrique et **en ce que** de préférence un interrupteur (20) est prévu sur le même côté d'un élément de conduction de chaleur (30) comme au moins une résistance (de 17 à 19, 41) respectivement un interrupteur (20) est prévu sur un côté écarté d'au moins un pôle de connexion (31) d'une résistance (de 17 à 19), d'un champ de logement pour la résistance (de 17 à 19), et ou **en ce que** un interrupteur (20) présente un socle (21) avec une voie de conduction électrique qui peut être interrompue, **en ce que** notamment le socle (21) porte un élément de protection (29) et **en ce que** de préférence un socle (21) forme, par raccordement direct avec un élément de conduction de chaleur (30), un élément de raccordement conduisant la chaleur entre un élément de protection (29) et l'élément de conduction de chaleur (30), un branchement (27) électrique pour la voie de conduction respectivement un assurage de positionnement par rapport à l'élément de conduction de chaleur (30).

8. Unité selon une des revendications précédentes, **caractérisé en ce que** au moins un élément de conduction de chaleur (30) se trouve sur au moins un côté (12, 13) essentiellement libre, **en ce que** notamment un détecteur d'environnement (40) est prévu pour une température ambiante, un courant ou semblable et **en ce que** de préférence un élément de conduction de chaleur (30) respectivement au moins une résistance (de 17 à 19) forme un détecteur (40) exposé à un mouvement fluidique pour le réglage d'un interrupteur (20) et/ou **en ce qu'**un dispositif de refroidissement est attribué à un élément de conduction de chaleur (30), à au moins une résistance (de 17 à 19) respectivement à un élément de protection (20), **en ce que** notamment un élément de fixation (5) est prévu pour la fixation d'un élément de conduction de chaleur (30), se dressant essentiellement libre dans un conduit fluidique (10) et **en ce que** de préférence au moins un dispositif de refroidissement séparé respectivement un support ou teneur (4) est attribué à un élément de conduction de chaleur (30a).

9. Unité selon une des revendications précédentes, **caractérisé en ce que** au moins une surface d'un élément de conduction de chaleur (30), d'une résistance (de 17 à 19), d'un élément de protection (29) respectivement d'un interrupteur (20) est disposée comme surface d'échangement de chaleur, **en ce que** notamment un élément de conduction de chaleur (30) délimite un puit d'aérage froid perforé, essentiellement dans le champ d'une surface de l'enveloppe et **en ce que** de préférence un support (4) se trouve en engagement essentiellement seulement dans le champ périphérique respectivement sur un côté détourné d'une résistance (de 17 à 19) par une couche de conduction de chaleur (42) avec un élément de conduction de chaleur (30, 30a) et/ou **en ce que** un support (4) est raccordé essentiellement par au moins un élément de fixation enfichable avec un élément de conduction de chaleur (30), **en ce que** notamment un élément de conduction de chaleur (30) se trouve essentiellement libre au-dehors d'un support (4) et **en ce que** de préférence un élément de conduction de chaleur (30) est raccordé par engagement direct respectivement par une branche (38) d'un support (4) avec un socle de support (5).

10. Unité selon une des revendications précédentes, **caractérisé en ce que** un support (4) forme un corps d'enfichage pour l'engagement à positionnement assuré dans une ouverture (11) et, vue en direction d'enfichage, saille essentiellement latéralement de tous les côtés au-delà d'au moins un élément de conduction de chaleur (30), au moins d'une résistance (de 17 à 19), d'un élément de protection (29), d'un interrupteur (20) respectivement d'un support (6), **en ce que** notamment au moins un élément de connexion (7) est prévu accèssible pour l'établissement d'un raccordement de connexion avec un conduit d'alimentation extérieur respectivement un support (4) forme un corps de connexion (5), présentant au moins un élément de connexion (7), pour la connexion électrique de l'unité de contrôle (1) et **en ce que** de préférence un support (4) est formé comme boîtier en forme de bol, lequel boîtier porte, saillant sur le côté extérieur d'une paroi de fond (39), un élément de conduction de chaleur (30) respectivement des éléments de connexion (7) accèssibles dans l'ouverture du bol, pour une fiche multiple ou semblable, et/ou **en ce que** au moins une pièce de connexion (32k), conectable à une résistance, forme une tête d'enfichage (53), **en ce que** notamment une pièce de connexion (32k) forme un enfourchement s'engageant autour d'un support de résistance et **en ce que** de préférence une surface de connexion d'une pièce de connexion (32k) présente des saillies (49) saillantes pour la formation d'une fente de brasage ou de soudure respectivement une ouverture de passage (50) pour l'apport de moyens de brasage ou soudage.

11. Unité selon une des revendications précédentes, **caractérisé en ce qu**' un auto-entretien (41) déconnectable séparément est adjoint à un interrupteur (20) pour un état de commande, **en ce que** notamment un chauffage d'auto-entretien (41) est adjoint à un élément de protection (29) et **en ce que** de préférence une résistance de chauffage (41) est prévue essentiellement en superposition avec une unité de construction (20), portante un élément de protection (29) respectivement en couplage en dérivation avec un interrupteur (20), sur un élément de conduction de chaleur (30), laquelle résistance présente, en état de branchement, une résistance plus haute que l'interrupteur (20) et/ou une résistance à couche, en forme de méandre, appliquée sur un élément de conduction de chaleur (30) est branchée respectivement en série avec une résistance en série (17).
